# EUROPEAN PATENT APPLICATION

(11) **EP 4 801 052 A1**
(43) Date of publication of application: **02.09.2026**
(21) Application number: 24896469.4
(22) Date of filing: 25.11.2024
(51) Int. Cl.: H04N 23/63, H04L 51/046

(54) **COMMUNICATION METHOD, COMMUNICATION APPARATUS, AND ELECTRONIC DEVICE**

(30) Priority: 01.12.2023 CN 202311645678
(71) Applicant: Vivo Mobile Communication Co., Ltd., Dongguan, Guangdong 523863 (CN)
(72) Inventor: JING, Junsen, Dongguan, Guangdong 523863 (CN)
(74) Representative: Murgitroyd & Company
(86) International application number: PCT/CN2024/134215
(87) International publication number: WO 2025/113380

(57) **Abstract**

This application discloses a communication method and apparatus, and an electronic device, pertaining to the field of communication technology. The method includes: receiving, by a second device, a first input performed by a user on a communication icon among at least one communication icon displayed in a shooting preview interface; in response to the first input, displaying, by the second device in the shooting preview interface, at least one contact sign in a communication application indicated by the communication icon selected by the first input, where the contact sign is used to indicate a contact or a session group in the communication application; receiving, by the second device, a second input performed by the user on a first contact sign among the at least one contact sign, where the first contact sign indicates a first contact; and in response to the second input, displaying, by the second device, a communication window, where the communication window is a communication window between the first contact and a second contact, the first contact is a contact corresponding to a first device, and the second contact is a contact corresponding to the second device.

## Description

### CROSS-REFERENCE TO RELATED APPLICATIONS

This application claims priority to the Chinese patent application filed with the China National Intellectual Property Administration on December 1, 2023, with Application No. 202311645678.0 and entitled "COMMUNICATION METHOD, COMMUNICATION APPARATUS, AND ELECTRONIC DEVICE", which is incorporated herein by reference in its entirety.

### TECHNICAL FIELD

This application pertains to the field of communication technology, and specifically relates to a communication method and apparatus, and an electronic device.

### BACKGROUND

Currently, the interaction between a user and an electronic device is primarily implemented by the user touching a screen of the electronic device to interact with the electronic device. However, since the screens of most electronic devices are capacitive screens, in scenarios where an electronic device is used for shooting underwater, the sensing function of the capacitive screen of the electronic device may be out of control due to the influence of water pressure. Problems such as non-response to operations, false response to operations, or chaotic response to operations may occur, increasing the difficulty for the user to normally interact with other users through the electronic device.

### SUMMARY

Embodiments of this application are intended to provide a communication method, a communication apparatus, and an electronic device, to implement normal communication and interaction between device users in scenarios where the electronic device is used for shooting underwater.

According to a first aspect, embodiments of this application provide a communication method. The communication method includes: receiving, by a second device, a first input performed by a user on a communication icon among at least one communication icon displayed in a shooting preview interface; in response to the first input, displaying, by the second device in the shooting preview interface, at least one contact sign in a communication application indicated by the communication icon selected by the first input, where the contact sign is used to indicate a contact or a session group in the communication application; receiving, by the second device, a second input performed by the user on a first contact sign among the at least one contact sign, where the first contact sign indicates a first contact; and in response to the second input, displaying, by the second device, a communication window, where the communication window is a communication window between the first contact and a second contact, the first contact is a contact corresponding to a first device, and the second contact is a contact corresponding to the second device.

According to a second aspect, embodiments of this application provide a communication method. The communication method includes: displaying, by a first device, a communication window, where the communication window is a communication window between a first contact and a second contact, the first contact is a contact corresponding to the first device, and the second contact is a contact corresponding to a second device; receiving, by the first device through the communication window, a communication message sent by the second device, where the communication message includes communication information, and the communication information is information indicated by an information sign selected by a user of the second device from at least one information sign; and displaying, by the first device, the communication information.

According to a third aspect, embodiments of this application provide a communication apparatus. The communication apparatus includes: a receiving module configured to receive a first input performed by a user on a communication icon among at least one communication icon displayed in a shooting preview interface, where the first input is used to select a communication icon, and the communication icon is used to indicate a communication application; and a display module configured to, in response to the first input received by the receiving module, display, in the shooting preview interface, at least one contact sign in a communication application indicated by the communication icon selected by the first input, where the contact sign is used to indicate a contact or a session group in the communication application; where the receiving module is further configured to receive a second input performed by the user on a first contact sign among the at least one contact sign displayed by the display module, where the second input is used to select a contact sign, and the first contact sign indicates a first contact; and the display module is further configured to, in response to the second input received by the receiving module, display a communication window, where the communication window is a communication window between the first contact and a second contact, the first contact is a contact corresponding to a first device, and the second contact is a contact corresponding to a second device.

According to a fourth aspect, embodiments of this application provide a communication apparatus. The communication apparatus includes: a display module configured to display a communication window, where the communication window is a communication window between a first contact and a second contact, the first contact is a contact corresponding to a first device, and the second contact is a contact corresponding to a second device; and a receiving module configured to receive, through the communication window displayed by the display module, a communication message sent by the second device, where the communication message includes communication information, and the communication information is information indicated by an information sign selected by a user of the second device from at least one information sign; and the display module is further configured to display the communication information received by the receiving module.

According to a fifth aspect, embodiments of this application provide an electronic device. The electronic device includes a processor and a memory, where the memory stores a program or instructions executable on the processor, and when the program or instructions are executed by the processor, the steps of the method according to the first aspect or the second aspect are implemented.

According to a sixth aspect, embodiments of this application provide a readable storage medium. The readable storage medium stores a program or instructions, and when the program or instructions are executed by a processor, the steps of the method according to the first aspect or the second aspect are implemented.

According to a seventh aspect, embodiments of this application provide a chip. The chip includes a processor and a communication interface, where the communication interface is coupled to the processor, and the processor is configured to run a program or instructions to implement the method according to the first aspect or the second aspect.

According to an eighth aspect, embodiments of this application provide a computer program product. The program product is stored in a storage medium, and the program product is executed by at least one processor to implement the method according to the first aspect or the second aspect.

In the embodiments of this application, a second device receives a first input performed by a user on a communication icon among at least one communication icon displayed in a shooting preview interface; in response to the first input, the second device displays, in the shooting preview interface, at least one contact sign in a communication application indicated by the communication icon selected by the first input, where the contact sign is used to indicate a contact or a session group in the communication application; the second device receives a second input performed by the user on a first contact sign among the at least one contact sign, where the first contact sign indicates a first contact; and in response to the second input, the second device displays a communication window, where the communication window is a communication window between the first contact and a second contact, the first contact is a contact corresponding to a first device, and the second contact is a contact corresponding to the second device. In this solution, one or more communication icons are displayed in the shooting preview interface, allowing a user to conveniently control the device to bring up a communication window with any contact by operating the communication icons in the shooting preview interface in an underwater shooting scenario, without needing to exit the shooting preview interface. This reduces cumbersome user operation steps for program switching, simplifies the communication process, and improves the convenience of user communication, implementing normal communication and interaction between device users in the underwater shooting scenario.

### BRIEF DESCRIPTION OF DRAWINGS

FIG. 1 is a flowchart of a communication method according to some embodiments of this application;
FIG. 2 is a schematic diagram of an example of displaying communication icons in a shooting preview interface according to some embodiments of this application;
FIG. 3 is a flowchart of a communication method according to some embodiments of this application;
FIG. 4A is a schematic diagram of an example of displaying a contact list in a shooting preview interface according to some embodiments of this application;
FIG. 4B is a schematic diagram of an example of displaying a contact list in a shooting preview interface according to some embodiments of this application;
FIG. 4C is a schematic diagram of an example of displaying a contact list in a shooting preview interface according to some embodiments of this application;
FIG. 5A is a schematic diagram of an example of displaying a video communication window in a shooting preview interface according to some embodiments of this application;
FIG. 5B is a schematic diagram of an example of displaying a video communication window in a shooting preview interface according to some embodiments of this application;
FIG. 6A is a schematic diagram of an example of displaying diving posture information signs in a shooting preview interface according to some embodiments of this application;
FIG. 6B is a schematic diagram of an example of displaying diving posture information signs in a shooting preview interface according to some embodiments of this application;
FIG. 6C is a schematic diagram of an example of displaying diving posture information signs in a shooting preview interface according to some embodiments of this application;
FIG. 7A is a schematic diagram of an example of displaying a message sign in a shooting preview interface according to some embodiments of this application;
FIG. 7B is a schematic diagram of an example of displaying a message sign in a shooting preview interface according to some embodiments of this application;
FIG. 7C is a schematic diagram of an example of displaying a message sign in a shooting preview interface according to some embodiments of this application;
FIG. 8 is a flowchart of a communication method according to some embodiments of this application;
FIG. 9 is a flowchart of a communication method according to some embodiments of this application;
FIG. 10A is a schematic diagram of an example of displaying a position relationship in a shooting preview interface according to some embodiments of this application;
FIG. 10B is a schematic diagram of an example of displaying a position relationship in a shooting preview interface according to some embodiments of this application;
FIG. 11 is a flowchart of a communication method according to some embodiments of this application;
FIG. 12 is a schematic diagram of an example of displaying navigation route information in a shooting preview interface according to some embodiments of this application;
FIG. 13 is a flowchart of a communication method according to some embodiments of this application;
FIG. 14 is a flowchart of a communication method according to some embodiments of this application;
FIG. 15 is a schematic diagram of an example of displaying communication messages in a communication interface according to some embodiments of this application;
FIG. 16 is a flowchart of a communication method according to some embodiments of this application;
FIG. 17 is a schematic diagram of an example of displaying communication messages in a shooting preview interface according to some embodiments of this application;
FIG. 18 is a schematic structural diagram of a communication apparatus according to some embodiments of this application;
FIG. 19 is a schematic structural diagram of a communication apparatus according to some embodiments of this application;
FIG. 20 is a schematic structural diagram of hardware of an electronic device according to some embodiments of this application; and
FIG. 21 is a schematic structural diagram of hardware of an electronic device according to some embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

The terms such as "at least one of" and "at least one" in the specification and claims of this application refer to any one, any two, or a combination of two or more among the included objects. For example, at least one of a, b, and c can mean "a", "b", "c", "a and b", "a and c", "b and c", and "a, b and c", where a, b, c can be provided in one or in plurality. Similarly, "at least two" means two or more, and the meaning expressed is similar to that of "at least one".

The signs in this application are texts, symbols, images, and the like used to indicate information. Signs or other containers are used as carriers for displaying information, including but not limited to text signs, symbol signs, and image signs.

The following details the communication method, communication apparatus, and electronic device according to the embodiments of this application with reference to the accompanying drawings through specific embodiments and application scenarios thereof.

It should be noted that the communication method according to the embodiments of this application can be executed by a device such as a mobile phone, a tablet computer, a notebook computer, a palmtop computer, or a vehicle-mounted electronic device. In some embodiments of this application, the communication method according to the embodiments of this application is described by taking a mobile phone as the execution subject to execute the communication method.

The communication method according to the embodiments of this application can be applied to scenarios where a user of an electronic device performs shooting underwater.

In a specific application scenario, the communication method according to the embodiments of this application can be applied to a scenario where a user guides the shooting posture of another user when using a mobile phone to take shots of the another users underwater, such as scenario 1.

Scenario 1: In a scenario where user 1 and user 2 are diving, if user 1 wants to take a photo of user 2 making a "heart" gesture with fingers next to a "coral", verbal communication between user 1 and user 2 is impossible in the underwater scenario, and they can only exchange simple information through gestures, unable to convey complex information. Therefore, to take a desired photo, user 1 needs to use various gestures and body movements to guide user 2 to swim to beside the "coral" and make a "heart" posture with fingers.

In another specific application scenario, the communication method according to the embodiments of this application can be applied to a scenario where a user uses a mobile phone underwater to send diving status inquiry information to another user, such as scenario 2.

Scenario 2: In a scenario where user 1 and user 2 are diving, it is assuming that user 1 and user 2 need to perform different underwater tasks and need to gather at a specified underwater location to return to land together after completing the tasks. Therefore, during the process of user 1 and user 2 performing underwater tasks, if user 1 completes the underwater task and wants to know the work completion status and diving status of user 2, for example, work completion progress of user 2, underwater position of user 2, diving depth of user 2, and whether oxygen of user 2 is sufficient, since user 2 is not in the field of view of user 1, user 1 can send a notification message to the mobile phone of user 2 through a communication application in the mobile phone, for example, sending "Have you completed the underwater task?" or "Have you arrived at the specified underwater location?" to inquire about work completion status of user 2; or "What depth have you reached?" or "Is your oxygen sufficient?" to inquire about the diving status of user 2. However, since the mobile phone of user 1 is affected by water pressure, the mobile phone screen of user 1 may become unresponsive, falsely responsive, or chaotically responsive, making it difficult for user 1 to edit specific diving status inquiry information in the communication interface between user 1 and user 2, leading to failure of normal communication and interaction between user 1 and user 2.

In the communication method, communication apparatus, and electronic device according to the embodiments of this application, one or more communication icons are displayed in the shooting preview interface, allowing a user to conveniently control the device to bring up a communication window with any contact by operating the communication icons in the shooting preview interface in an underwater shooting scenario, without needing to exit the shooting preview interface. This reduces cumbersome user operation steps for program switching, simplifies the communication process, and improves the convenience of user communication, implementing normal communication and interaction between device users in the underwater shooting scenario.

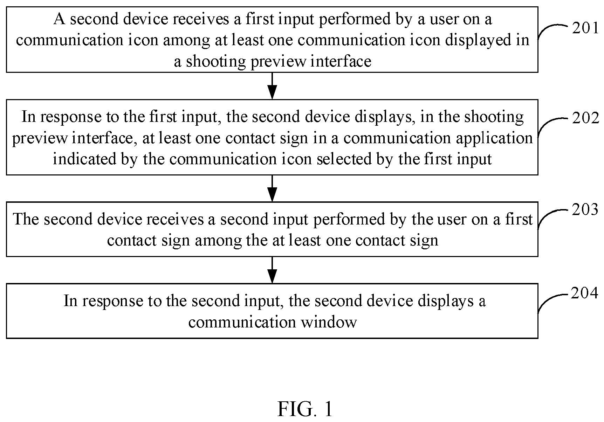

Embodiments of this application provide a communication method. FIG. 1 is a flowchart of a communication method according to an embodiment of this application. As shown in FIG. 1, the communication method according to the embodiment of this application may include the following steps 201 to 204.

Step 201: A second device receives a first input performed by a user on a communication icon among at least one communication icon displayed in a shooting preview interface.

In some embodiments of this application, the first input is used to select a communication icon, and the communication icon is used to indicate a communication application.

In some embodiments of this application, the first input may include any one of the following: a tap input, a swipe input, a press input, a voice input, a gesture input, or other feasible inputs of a user, which is not limited in the embodiments of this application.

In some embodiments of this application, the gesture input may include but is not limited to at least one of the following: a tap gesture, a swipe gesture, a drag gesture, a pressure recognition gesture, a long press gesture, an area change gesture, a double-press gesture, a double-tap gesture, a specific gesture input, and other possible gesture inputs. The specific form of the gesture input may be determined according to actual needs, and is not limited in some embodiments.

In some embodiments of this application, the tap operation may be a tap operation of any number of times. The swipe operation may be a swipe operation in any direction, such as swipe upward, swipe downward, swipe left, or swipe right, which is not limited in some embodiments.

In some embodiments of this application, the first input includes an air gesture input.

In some embodiments of this application, the air gesture refers to a gesture performed when a user's hand is not in contact with an electronic device or an external control device and the distance between the user's hand and the electronic device is greater than or equal to a preset distance threshold, for example, the preset distance threshold may be 1 cm.

In some embodiments of this application, the second device may capture the hand movements of the user through a camera or a sensor, and detect the air gesture based on the captured hand movement data, thereby implementing control of the electronic device.

For example, the camera may be a time of flight (Time of Flight, TOF) camera.

For example, the sensor may be a radar sensor, an infrared sensor, an ultrasonic sensor, or the like. The sensor is typically provided below a display screen of the electronic device.

In some embodiments of this application, the second device may determine, based on an input parameter of the air gesture input, a communication icon selected by the air gesture input. For example, the input parameter of the air gesture input may include a starting position, a moving direction, an ending position, a moving trajectory, and the like of the air gesture input.

For example, the first input may be an air tap input performed by the user on a communication icon.

In this way, through the air gesture input, the user can control the second device to select the communication icon displayed in the shooting preview interface without inputting on the touch display screen of the device, so that even if the touch function of the screen of the second device fails underwater, the user can still control the device to perform corresponding operations.

In some embodiments of this application, the first input includes an input performed by the user on a physical key on the second device.

In some embodiments of this application, the physical key on the second device may be: a volume up key, a volume down key, a power key, or any physical key in the second device.

In some embodiments of this application, the "input performed by the user on a physical key on the second device" may be an input performed by the user on one physical key on the second device, an input performed by the user on multiple physical keys on the second device, or an input performed by the user on a combination of physical keys.

For example, the first input may include a press input performed by the user on the volume down key and a press input performed by the user on the volume up key. For example, assuming that the user wants to select communication icon 1 in the shooting preview interface, the user can control, through a press input on the volume down key, the second device to select the communication icon 1 among multiple communication icons displayed in the shooting preview interface, and then control, through a press input on the volume up key, the second device to confirm the selection of the communication icon 1, thereby controlling the second device to display a contact sign in a communication application indicated by the communication icon 1.

In this way, through input on the physical keys of the device, the user can control the second device to select the communication icon displayed in the shooting preview interface without inputting on the touchscreen of the device, so that even if the touch function of the screen of the second device fails underwater, the user can still control the device to perform corresponding operations.

In some embodiments of this application, the first input may alternatively be a press input performed by the user on a communication icon.

It should be noted that although the display screen is highly likely to be out of control when the electronic device is underwater, due to the large input area and long input duration of the press input, the press input can still respond normally to a large extent. For example, the user can long press a communication icon, and if the electronic device system detects that the press duration of the user exceeds 3s, the electronic device system selects the communication icon to control the second device to display a contact sign in a communication application indicated by the communication icon.

In some embodiments of this application, the communication application corresponding to the at least one communication icon may be at least one installed communication function application, mini program, quick app, or the like that has a communication function in the second device.

For example, the application may include a social application, a navigation application, and the like.

In some embodiments of this application, the second device may display an icon window in the shooting preview interface, where the icon window contains at least one communication icon.

For example, the window background of the icon window may be in a transparent state, allowing the user to view the preview image below the icon window through the icon window. This prevents the icon window from blocking the shooting preview image displayed in the shooting preview interface, allowing the user to view both the communication icon and the preview image captured by the second device.

For example, the icon window may be a floating window. For example, the icon window may be displayed floating in the shooting preview interface, and when the user drags the icon window, the icon window may move in the shooting preview interface along with the drag operation of the user.

In some embodiments of this application, the second device may directly display at least one communication icon in the shooting preview interface.

In some embodiments of this application, the second device may display at least one communication icon or the icon window at any position in the shooting preview interface.

For example, the second device may display at least one communication icon at any edge position of the shooting preview interface, such as an upper edge position, a lower edge position, a left edge position, or a right edge position. This prevents obstruction to the user's viewing of the content displayed in the shooting preview image.

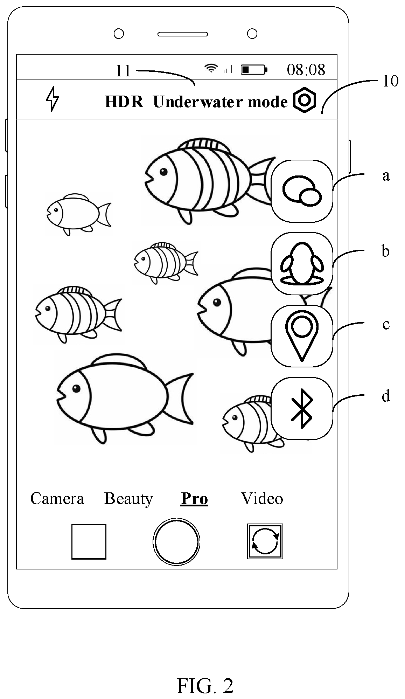

For example, taking underwater shooting with a mobile phone underwater as an example, as shown in FIG. 2, the mobile phone displays 4 communication icons in the right edge area of the shooting preview image 10: program icon a of personal communication program A, program icon b of enterprise communication program B, program icon c of a map program, and program icon d of a Bluetooth communication program.

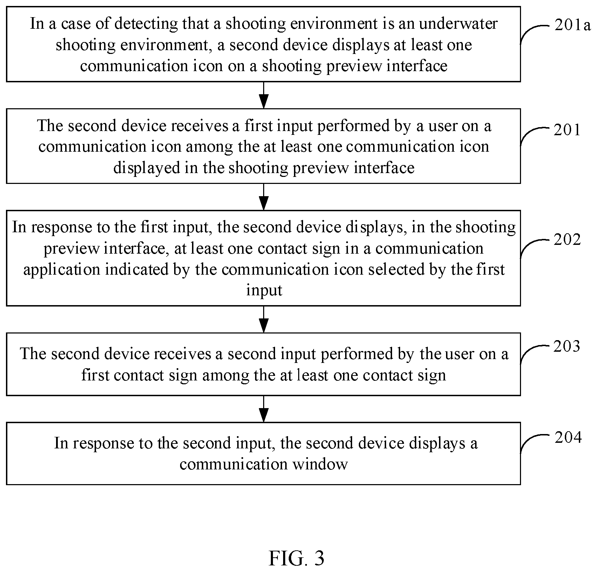

In some embodiments of this application, with reference to FIG. 1, as shown in FIG. 3, before the step 201, the communication method according to the embodiments of this application further includes the following step 201a.

Step 201a: In a case of detecting that a shooting environment is an underwater shooting environment, the second device displays at least one communication icon in a shooting preview interface.

In some embodiments of this application, in a case that the second device displays the shooting preview interface, if the second device detects that most touch areas in the screen of the second device receive an identical or similar pressure, it can be considered that the screen of the second device is pressed by the external environment. In this case, it can be determined that the current shooting environment is an underwater shooting environment. For example, in a case that the second device detects that 90% of the touch areas in the screen receive an identical pressure or detects that a pressure difference between pressures received by 90% of the touch areas in the screen is less than 5, the second device determines that the current shooting environment is an underwater shooting environment.

In some embodiments of this application, in a case that the second device displays the shooting preview interface, if the second device detects that the image content captured in the shooting preview image displayed in the shooting preview interface includes underwater creatures, such as sea fish, coral, or seaweed, the second device determines that the current shooting environment is an underwater shooting environment.

In some embodiments of this application, since the humidity differs between the underwater scenario and above-water scenario, the second device can detect the ambient humidity of the second device through a humidity sensor. If the detected ambient humidity is within the humidity value range of the underwater scenario, it can be determined that the current shooting scenario of the second device is an underwater shooting scenario; or if the detected ambient humidity is within the humidity value range of the above-water scenario, it can be determined that the current shooting scenario of the second device is an above-water shooting scenario.

In this way, through shooting environment detection, the second device can automatically display, when detecting that the shooting environment is an underwater shooting environment, at least one communication icon in the shooting preview interface, without requiring the user to manually control the second device to display the communication icon in the shooting preview interface. This reduces manual control operations by the user during the underwater shooting process, thereby improving the convenience of underwater communication.

In some embodiments of this application, before going underwater, the user of the second device can tap the "Camera" icon in the second device to control the second device to display the shooting preview interface, where the shooting preview interface includes a "Underwater mode" control, such as control 11 shown in FIG. 2. When the user of the second device taps the "Underwater mode" control, the second device can be controlled to enter the underwater mode. In the underwater mode, at least one communication icon is displayed in the shooting preview interface displayed by the second device, allowing the user to implement underwater communication.

Step 202: In response to the first input, the second device displays, in the shooting preview interface, at least one contact sign in a communication application indicated by the communication icon selected by the first input.

In some embodiments of this application, the contact sign is used to indicate a contact or a session group in the communication application.

In some embodiments of this application, the at least one contact sign may be a contact sign of a preset contact in the communication application indicated by the communication icon selected by the first input.

In some embodiments of this application, after receiving the first input, the second device may directly display, in the shooting preview interface, at least one contact sign in the communication application indicated by the communication icon selected by the first input.

In some embodiments of this application, after receiving the first input, the second device may display, in the shooting preview interface, a contact window of the communication application indicated by the communication icon selected by the first input, where the contact window displays at least one contact sign.

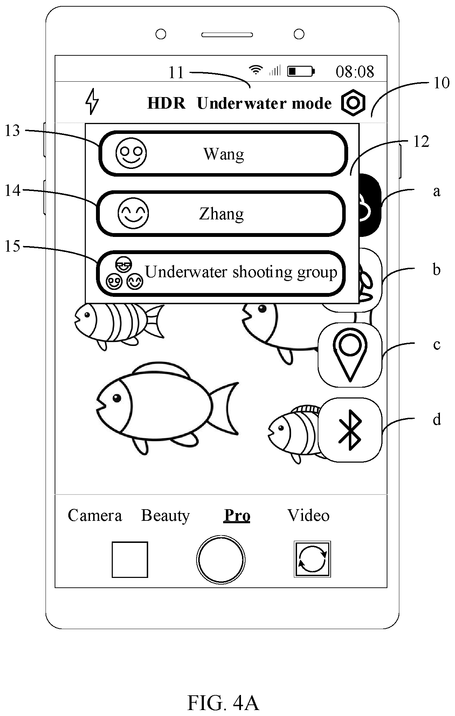

Example 1: Taking user 1 as "Li" and user 2 as "Wang" in scenarios 1 and 2 as an example, it is assumed that the mobile phone of "Li" is the second device. With reference to FIG. 2, in the above scenarios 1 and 2, if "Li" wants to communicate with "Wang" through the personal communication program A in the mobile phone, "Li" can press the volume down key of the mobile phone to select among the 4 communication icons displayed in the shooting preview interface 10, and when the program icon a of the personal communication program A is selected, press the volume up key to confirm the selection of the program icon a of the personal communication program A; or "Li" can perform an air tap on the program icon a of the personal communication program A, that is, the first input. As shown in FIG. 4A, in this case, the mobile phone of "Li" can display the contact window 12 of the personal communication program A in the shooting preview interface 10, where the contact window 12 contains three contact signs: contact sign 13 of "Wang", contact sign 14 of "Zhang", and group sign 15 of "Underwater shooting group".

In some embodiments of this application, the at least one contact sign may be a contact sign of a contact that meets a contact sign display condition in the communication application indicated by the communication icon selected by the first input.

For example, the contact that meets the contact sign display condition includes at least one of the following:
a contact corresponding to a device with a signal strength greater than a strength threshold;
a contact corresponding to a device whose distance from the second device is less than a first distance threshold and that has established a Bluetooth connection to the second device; and
a contact corresponding to a device whose communication frequency with the second device is greater than or equal to a predetermined frequency.

In some embodiments of this application, the at least one contact sign includes at least one of the following: a contact sign of a contact corresponding to a device with a signal strength greater than a strength threshold, and a contact sign of a contact corresponding to a device whose distance from the second device is less than a first distance threshold and that has established a Bluetooth connection to the second device.

For example, the "device with a signal strength greater than a strength threshold" can be understood as: a device that can perform normal signal transmission with the second device. For example, a value of the strength threshold may be any value in [-90 dBm, -50 dBm].

Example 2: With reference to Example 1, it is assumed that the strength threshold is -90 dBm. After "Li" presses the volume up key to confirm the selection of the program icon a of the personal communication program A, or after "Li" performs an air tap on the program icon a of the personal communication program A, the mobile phone can be controlled to detect the signal strength of other devices nearby, and display, in the shooting preview interface 10, a contact whose device has a signal strength greater than -90 dBm in the personal communication program A. For example, if it is detected that the signal strength of the mobile phone of "Wang" is -70 dBm and the signal strength of the mobile phone of "Zhang" is -95 dBm, and both "Wang" and "Zhang" are contacts in the personal communication program A in the mobile phone of "Li", since the signal strength of the mobile phone of "Wang" is -70 dBm and greater than -90 dBm, the contact sign of "Wang" can be displayed in the shooting preview interface 10.

For example, the "device whose communication frequency with the second device is greater than or equal to a predetermined frequency" can be understood as: a device whose number of communications with the second device within a preset time period is greater than a predetermined number of times. For example, the predetermined time period may be 3 days, and the predetermined number of times may be 3.

Example 3: With reference to Example 1, after "Li" presses the volume up key to confirm the selection of the program icon a of the personal communication program A, or after "Li" performs an air tap on the program icon a of the personal communication program A, the mobile phone is controlled to display a contact sign of a contact who has communicated with "Li" through the personal communication program A for more than 3 times within 3 days. For example, assuming that "Zhang" has not contacted "Li" through the personal communication program A within 3 days and "Wang" has communicated with "Li" 15 times through the personal communication program A within 3 days, then the mobile phone can be controlled to display the contact sign of "Wang" in the shooting preview interface 10.

For example, the first distance threshold may be considered as a maximum distance for establishing a Bluetooth connection. For example, the first distance threshold may be 20 m.

In other words, in a case that a distance between two devices is less than or equal to the first distance threshold, a Bluetooth connection can be established between the two devices. Conversely, in a case that a distance between two devices is greater than the first distance threshold, a Bluetooth connection cannot be established between the two devices.

It should be noted that all devices involved in the embodiments of this application have been successfully paired via Bluetooth in advance. In this way, in a case that a distance between any two devices is less than the first distance threshold, the any two devices can perform data transmission via Bluetooth.

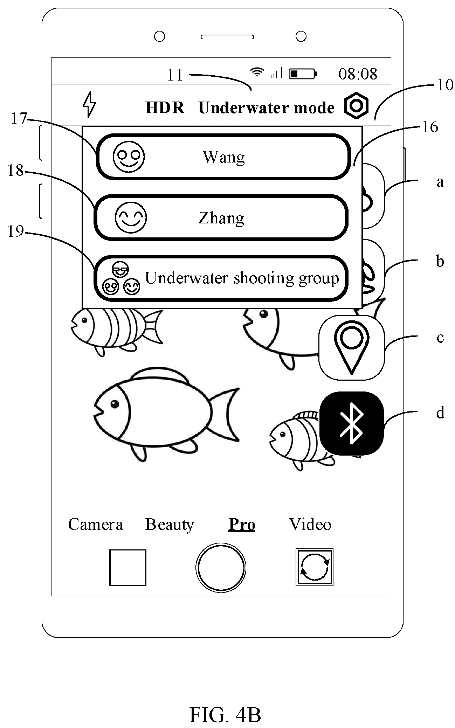

Example 3: Taking user 1 as "Li" and user 2 as "Wang" in scenarios 1 and 2 as an example, it is assumed that the mobile phone of "Li" is the second device. With reference to FIG. 2, in the above scenarios 1 and 2, if the mobile phone of "Li" and the mobile phone of "Wang" have successfully paired via Bluetooth before going underwater, "Li" taps program icon d of a Bluetooth communication program before going underwater, that is, the first input, to control the mobile phone to display a Bluetooth communication interface 16 in the shooting preview interface. In this case, the mobile phone of "Li" can dynamically display, in the shooting preview interface 10, a contact sign of a contact corresponding to a device that has established a Bluetooth connection to the mobile phone of "Li". For example, as shown in FIG. 4B, in a case that a distance between the mobile phone of "Wang" and the mobile phone of "Li" is less than 20 meters, that is, the first distance threshold, the mobile phone of "Li" can display a contact sign 17 of "Wang" in the Bluetooth communication interface 16.

In some embodiments of this application, for a scenario where the at least one contact sign includes a contact sign of a contact corresponding to a device whose distance from the second device is less than a first distance threshold and that has established a Bluetooth connection to the second device, when the second device and the first device have been paired via Bluetooth and established a Bluetooth connection, the second device may display, in the shooting preview interface, a contact sign of a contact corresponding to the first device.

In a possible embodiment, in a case that the second device and the first device have been paired via Bluetooth and established a Bluetooth connection, the communication method according to the embodiments of this application further includes the following step A1.

Step A1: In a case that a distance between the second device and the first device is greater than the first distance threshold, the second device disconnects the Bluetooth connection between the first device and the second device.

In some embodiments of this application, after the second device disconnects the Bluetooth connection between the first device and the second device, the second device may cancel the display of the contact sign of the contact corresponding to the first device in the shooting preview interface.

In some embodiments of this application, after the second device disconnects the Bluetooth connection between the first device and the second device, the second device may further set the contact sign of the contact corresponding to the first device in the shooting preview interface to a preset state, to prompt the user that the distance between the first device and the second device is too far for communication.

For example, the preset state may include but is not limited to any one of the following: increasing transparency of the contact sign, adjusting a display color of the contact sign to a specific color, and displaying a special symbol on the mark.

For example, the specific color may be gray or black.

For example, the special symbol may be any special symbol set by the user, for example, a cross mark or a prohibition symbol.

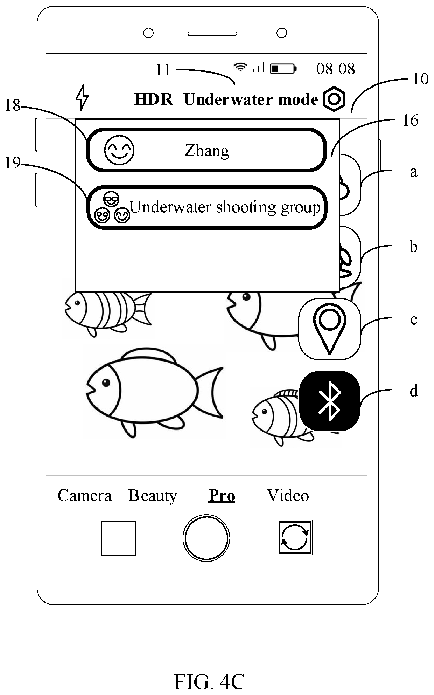

Example 4: With reference to FIG. 4B, if the distance between the mobile phone of "Wang" and the mobile phone of "Li" is greater than 20 meters, that is, the first distance threshold, the Bluetooth connection between the mobile phone of "Wang" and the mobile phone of "Li" is automatically disconnected, and as shown in FIG. 4C, the mobile phone of "Li" cancels the display of the contact sign 17 of "Wang" in the Bluetooth communication interface 16.

In this way, by monitoring a change in distance to the first device, the second device updates in real time the contact signs displayed on the second device, to ensure that the contact signs displayed on the second device are contact signs of contacts within the effective underwater communication distance range with whom communication is possible. In other words, this ensures that the second device displays valid contact signs, allowing the user to identify with whom communication is currently possible, thereby improving the accuracy and flexibility of communication connection.

In some embodiments of this application, with reference to step A1, the communication method according to the embodiments of this application further includes the following step B1 and step B2.

Step B1: The second device monitors a change in distance to the first device.

Step B2: In a case of detecting that the distance to the first device changes from greater than the first distance threshold to less than the first distance threshold, the second device re-establishes a Bluetooth connection to the first device, and uses the contact sign of the contact corresponding to the first device as a contact sign displayable in the shooting preview interface.

Example 5: With reference to FIG. 4C, when the distance between the mobile phone of "Wang" and the mobile phone of "Li" gradually decreases to less than 20 meters, that is, the first distance threshold, the mobile phone of "Li" can reestablish a Bluetooth connection to the mobile phone of "Wang", that is, "Li" can communicate with the mobile phone of "Wang" via Bluetooth, and the mobile phone of "Li" can display again the contact sign 17 of "Wang" in the Bluetooth communication interface 16, as shown in FIG. 4B.

In this way, by monitoring a change in distance to the first device, the second device updates in real time the contact signs displayed on the second device, to ensure that the contact signs displayed on the second device are contact signs of contacts within the effective underwater communication distance range with whom communication is possible. In other words, this ensures that the second device displays valid contact signs, allowing the user to identify with whom communication is currently possible, thereby improving the convenience of communication.

In some embodiments of this application, in a case that the second device displays at least one contact sign, the second device may update a display parameter of the at least one contact sign based on a distance between the second device and an electronic device corresponding to a contact indicated by the at least one contact sign.

In some embodiments of this application, the display parameter may include but is not limited to at least one of the following: a display order and a display color.

For example, the second device displays the at least one contact sign in order from near to far based on a distance between the second device and the electronic device corresponding to the at least one contact sign.

For example, the second device displays contact signs in green, yellow, red, and gray sequentially from near to far based on the distance between the second device and the electronic device corresponding to the at least one contact sign.

Step 203: The second device receives a second input performed by the user on a first contact sign among the at least one contact sign.

In some embodiments of this application, the second input is used to select a contact sign, and the first contact sign indicates a first contact.

In some embodiments of this application, the second input includes an air gesture input or an input performed by the user on a physical key on the second device.

For example, the second input may be an air tap input performed by the user on a contact sign.

For example, the second input includes an input performed by the user on a physical key on the second device.

For example, the physical key on the second device may be: a volume up key, a volume down key, a power key, or any physical key in the second device.

For example, the "input performed by the user on a physical key on the second device" may be an input performed by the user on one physical key on the second device, an input performed by the user on multiple physical keys on the second device, or an input performed by the user on a combination of physical keys.

For example, the second input may include a press input performed by the user on the volume down key and a press input performed by the user on the audio up key. For example, assuming that the user wants to select contact sign 1 displayed in the shooting preview interface, the user can control, through a press input on the volume down key, the second device to select the contact sign 1 among multiple contact signs displayed in the shooting preview interface, and then control, through a press input on the volume up key, the second device to confirm the selection of the contact sign 1, thereby controlling the second device to display a communication interface between the contact corresponding to the second device and the contact indicated by the contact sign 1.

It should be noted that for the specific description of the second input, reference may be made to the detailed description of the first input above. To avoid repetition, details are not repeated herein.

Step 204: In response to the second input, the second device displays a communication window.

In some embodiments of this application, the communication window is a communication window between the first contact and a second contact, where the first contact is a contact corresponding to a first device, and the second contact is a contact corresponding to the second device.

It should be noted that the contact corresponding to the first device can be understood as: a contact indicated by an account logged in the communication application installed on the first device. Similarly, the contact corresponding to the second device can be understood as: a contact indicated by an account logged in the communication application installed on the second device. The contact indicated by this account can be one user or one group.

In some embodiments of this application, the communication window includes at least one of the following: a session window, and a video call window.

In some embodiments of this application, the "session window" is a session interface that can provide information exchange for contacts. In other words, the session window may be a chat interface for transmitting information such as text, images, and files between contacts.

In some embodiments of this application, in a case that the communication window includes a session window, the first contact and the second contact may perform information exchange by transmitting communication messages.

In some embodiments of this application, the "video call window" is a call interface that can provide a video call function between contacts.

In some embodiments of this application, in a case that the communication window includes a video call window, the first contact and the second contact can view each other through video or view a shooting preview image acquired by the device of the other party.

In some embodiments of this application, the second device may display the communication window in full screen.

In some embodiments of this application, the communication window may be a floating window, that is, the communication window may be displayed floating in the shooting preview interface.

For example, a window background of the communication window may be in a transparent state, allowing the user to view a preview image below the communication window through the communication window. This can prevent the communication window from blocking the shooting preview image displayed in the shooting preview interface, allowing the user to view both the communication message and the preview image captured by the second device.

In some embodiments of this application, the second device may display the communication window at any position in the shooting preview interface.

In some embodiments of this application, a window size and a display position of the communication window can be adjusted.

For example, the user flexibly adjusts the window size of the communication window through an air gesture input. For example, the user controls, through a two-finger air pinch input, the second device to reduce the window size of the communication window, or the user controls, through a two-finger air spread input, the second device to increase the window size of the communication window.

In one example, there is a mapping relationship between a pinch distance corresponding to the two-finger air pinch input and the window size of the communication window. For example, every 2 cm pinch of two fingers reduces the window size of the communication window by 10%.

In another example, there is a mapping relationship between a spread distance corresponding to the two-finger air spread input and the window size of the communication window. For example, every 2 cm spread of two fingers increases the window size of the communication window by 10%.

For example, the user drags, through an air drag input, the communication window to move, and the communication window can move in the shooting preview interface with the drag operation of the user.

In some embodiments of this application, the communication window between the first contact and the second contact may be a communication message window or a video communication window.

In some embodiments of this application, the video communication window includes a main display window and at least one auxiliary display window. The main display window displays a shooting preview image captured by the second device, and one auxiliary display window among the at least one auxiliary display window displays a shooting preview image captured by a device of one first contact.

For example, the auxiliary display window is overlaid on the main display window.

For example, the user of the second device can control, through an input on the auxiliary display window, the second device to swap the shooting preview image displayed in the main display window with the shooting preview image input by the user and displayed in the auxiliary display window.

For example, it is assumed that: the first contact corresponds to group 1, the group 1 includes three group members, and the three group members include a local user and two other contacts. Then, the video communication interface displayed by the second device includes one main display window and two auxiliary display windows. The main display window displays the shooting preview image captured by the local device, and the two auxiliary display windows respectively display the shooting preview images captured by devices corresponding to the two contacts.

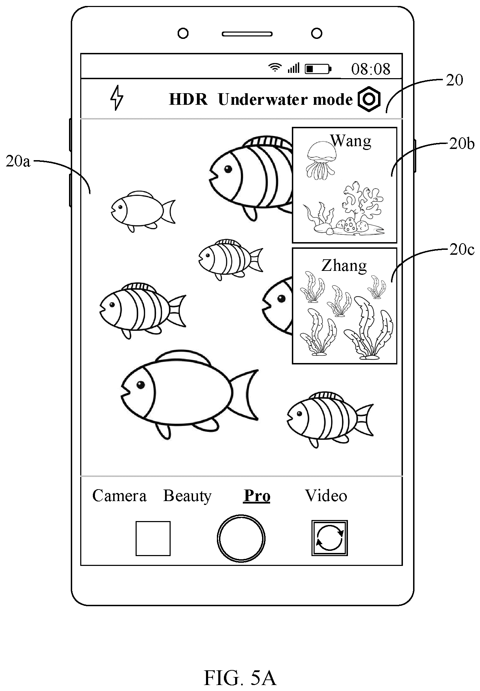

Example 6: With reference to FIG. 4B, it is assumed that a group corresponding to the "Underwater shooting group" includes "Li", "Wang", and "Zhang". If "Li" wants to view the shooting preview images captured by the mobile phones of "Wang" and "Zhang", "Li" can control, through a press input on the volume down key of the mobile phone, the mobile phone to select the group identifier 19 of the "Underwater shooting group" in the Bluetooth communication interface 16, and then control, through a press input on the volume up key, the mobile phone to confirm the selection of the group identifier 19 of the "Underwater shooting group"; or "Li" performs an air tap on the group identifier 19 of the "Underwater shooting group". In this case, as shown in FIG. 5A, the mobile phone of "Li" can display the video communication interface 20 corresponding to the group identifier 19 of the "Underwater shooting group". The video communication interface 20 includes a main display area 20a, an auxiliary display area 20b, and an auxiliary display area 20c, where the main display area 20a displays the shooting preview image captured by the mobile phone of "Li", such as a school of fish, the auxiliary display area 20b displays the shooting preview image captured by the mobile phone of "Wang", such as coral and jellyfish, and the auxiliary display area 20c displays the shooting preview image captured by the mobile phone of "Zhang", such as a large area of seaweed.

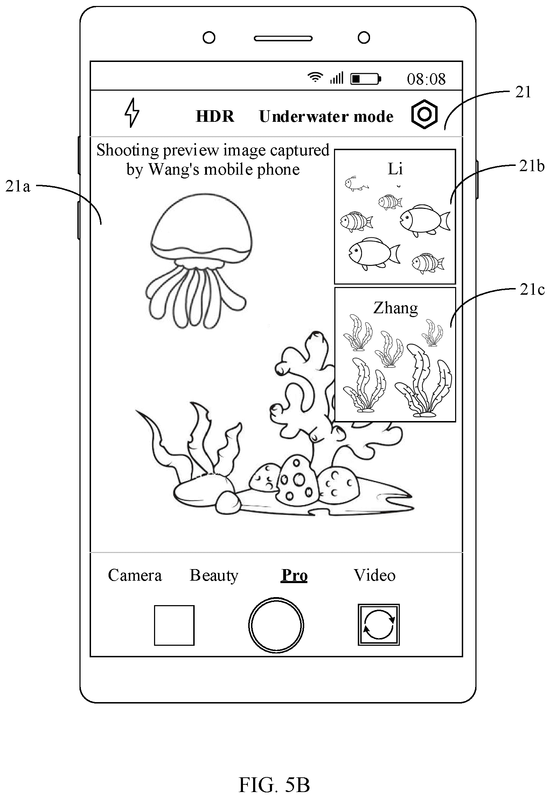

Further, with reference to FIG. 5A, if "Li" wants to enlarge and view the shooting preview interface captured by the mobile phone of "Wang", "Li" can perform a press input on the auxiliary display area 20b in the video communication interface 20. In this case, as shown in FIG. 5B, the mobile phone of "Li" updates and displays the video communication interface 21, where the updated video communication interface 21 includes a main display area 21a, an auxiliary display area 21b, and an auxiliary display area 21c, the main display area 21a displays the coral and jellyfish captured by the mobile phone of "Wang", the auxiliary display area 21b displays the school of fish captured by the mobile phone of "Li", and the auxiliary display area 21c displays the seaweed captured by the mobile phone of "Zhang". That is, in the communication video interface displayed by the mobile phone of "Li", the display positions of the shooting preview image captured by the mobile phone of "Li" and the shooting preview image captured by the mobile phone of "Wang" are swapped.

It should be noted that when "Li" controls the mobile phone to switch the preview image in the main display window to the preview image of "Wang", the video communication interface displayed in the mobile phone of "Zhang" does not change due to the action of "Li".

In some embodiments of this application, in a case that the second device displays the shooting preview image, the second device may receive an input performed by the user on a specified area or a specified control in the shooting preview interface, to control the at least one communication icon displayed by the electronic device in the shooting preview interface.

In the communication method according to the embodiments of this application, by displaying one or more communication icons in the shooting preview interface, a user can conveniently control, by operating the communication icons in the shooting preview interface in an underwater shooting scenario, the device to bring up a communication window with any contact, without needing to exit the shooting preview interface. This reduces cumbersome user operation steps for program switching, simplifies the communication process, and improves the convenience of user communication, implementing normal communication and interaction between device users in the underwater shooting scenario.

In some embodiments of this application, the shooting preview interface includes: at least one information sign, where each information sign is used to indicate one piece of communication information.

In some embodiments of this application, the communication information may be text that is set by the user in advance and that can be sent directly.

In some embodiments of this application, the communication information may be generated by the electronic device based on historical communication information. For example, the second device may select communication information with high usage frequency based on past historical communication information in the communication program.

In some embodiments of this application, the user can edit, add, or delete communication information that is set in the electronic device.

In some embodiments of this application, an information sign window may be displayed in the shooting preview interface, and at least one information sign may be displayed in the information sign window.

For example, the user can update, through an input, the information sign displayed in the information sign window. For example, through an air swipe input, the user can swipe to update the information sign included in the information sign window.

In some embodiments of this application, the shooting preview interface may directly display at least one information sign.

In some embodiments of this application, the shooting preview interface may display an information sign list, where at least one information sign may be displayed in the information sign list. In one example, an information sign window may be displayed in the shooting preview interface, where the information sign window includes one information sign list.

In some embodiments of this application, the communication information includes at least one of the following: diving control information, and notification information.

In some embodiments of this application, the information sign includes but is not limited to: text, symbol, picture, and digit.

For example, in a case that the information sign is used to indicate diving control information, the information sign includes but is not limited to: a posture picture of a diving posture, a name of the diving posture, and an index of the diving posture.

For example, the posture picture of the diving posture may be simple sketches of the diving posture.

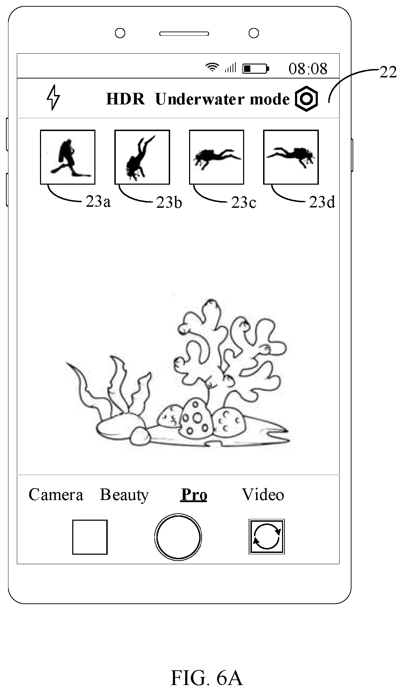

For example, taking underwater shooting with a mobile phone underwater as an example, as shown in FIG. 6A, the mobile phone displays four information signs of diving postures in the shooting preview image 22: an identifier 23a, an identifier 23b, an identifier 23c, and an identifier 23d, where the identifier 23a includes a simple sketch of the diving posture "Surface up", the identifier 23b includes a simple sketch of the diving posture "Dive down", the identifier 23c includes a simple sketch of the diving posture "Move left", and the identifier 23d includes a simple sketch of the diving posture "Move right".

For example, names of the diving postures include but are not limited to: rotate, turn around, raise hand, lift head, fingers "heart", fingers thumbs-up, surface up, dive down, and the like.

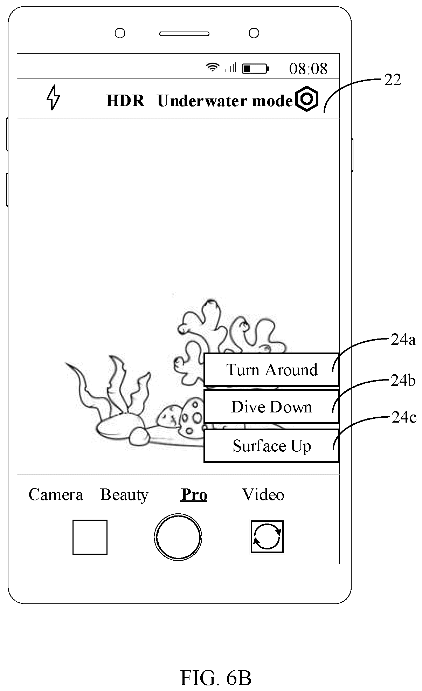

For example, taking underwater shooting with a mobile phone underwater as an example, as shown in FIG. 6B, the mobile phone displays three information signs of diving postures in the shooting preview image 22: an identifier 24a, an identifier 24b, and an identifier 24c, where the identifier 24a includes the diving name "Turn around", the identifier 24b includes the diving name "Dive down", and the identifier 24c includes the diving name "Surface up".

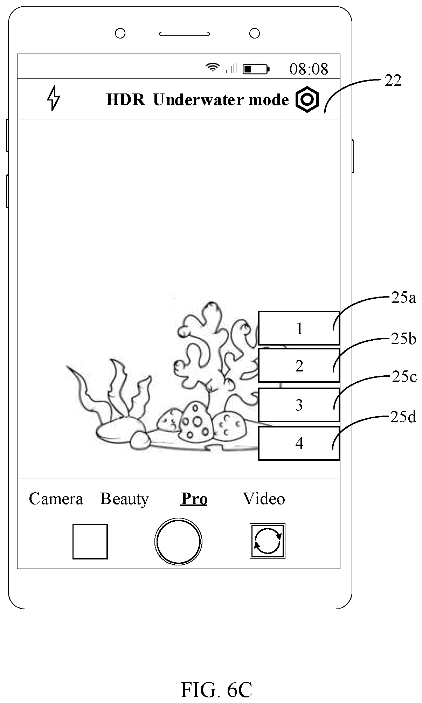

For example, each index corresponds to one diving posture. For example, index 1 corresponds to the diving posture "Surface up", index 2 corresponds to the diving posture "Dive down", index 3 corresponds to the diving posture "Move left", and index 4 corresponds to the diving posture "Move right". The shooting preview interface 22 in FIG. 6C includes four information signs of diving postures: an identifier 25a, an identifier 25b, an identifier 25c, and an identifier 25d, where the identifier 25a includes index 1, the identifier 25b includes index 2, the identifier 25c includes index 3, and the identifier 25d includes index 4.

For example, in a case that the information sign is used to indicate notification information, the information sign includes but is not limited to: information content of the notification information, key content in the notification information, and an index of the notification information.

In some embodiments of this application, in a case that the communication information includes the diving control information, the diving control information includes control information for controlling adjustment of a diving posture or a diving action, and the diving control information is used to indicate a user of the first device to adjust a diving posture or a diving action.

In some embodiments of this application, the "indicating the user of the first device to adjust a diving posture" may be understood as: indicating the user of the first device to adjust their body posture to adjust the diving posture.

In some embodiments of this application, the diving control information may include but is not limited to: diving posture information, diving direction information, and diving distance information.

For example, the diving posture information is used to indicate the user of the first device to adjust a diving posture.

For example, the diving direction information is used to indicate the user of the first device to adjust a diving direction.

For example, the diving distance information is used to indicate the user of the first device to adjust a diving distance.

For example, the diving posture information includes but is not limited to: rotate, turn around, raise hand, lift head, fingers "heart", fingers thumbs-up, surface up, dive down, and the like. Further, the rotate includes but is not limited to: rotate clockwise by 90°, rotate clockwise by 45°, rotate counterclockwise by 90°, and rotate counterclockwise by 45°.

For example, the diving direction information includes but is not limited to: move up, move down, move left, move right, and the like.

For example, the diving distance information includes but is not limited to: surface up 10 meters, dive down 20 meters, move left 5 meters, move right 5 meters, and the like.

In some embodiments of this application, the user may control, through one input, the second device to display a distance setting interface in the shooting preview interface. The user may determine a specific diving distance through the distance setting interface.

In one example, the distance setting interface includes a number axis, and the user can set a specific diving distance through the number axis, thereby determining the diving control information.

For example, the distance setting interface includes a number axis, along which moving right corresponds to positive values and moving left corresponds to negative values. When the user continuously presses the volume down key, the position point on the number axis moves rightward from the origin, and the distance value displayed in the area corresponding to the position point continuously increases; when the user continuously presses the volume up key, the position point on the number axis moves leftward from the origin, and the value displayed in the area corresponding to the position point continuously decreases. If the user continuously presses the volume up key until the position point moves to -5 and then stops pressing the volume down key, the corresponding diving control information is "move left 5 meters".

For example, the user may control, through one input, the second device to display a diving posture setting interface in the shooting preview interface. The user may determine a specific diving posture through the diving posture setting interface.

In some embodiments of this application, in a case that the communication information includes the notification information, the notification information includes at least one of the following: notification information for passing a to-do item to a user of the first device, notification information for passing a user status of a user of the second device to the user of the first device, and notification information for passing inquiry information to the user of the first device.

In some embodiments of this application, the "passing a to-do item to a user of the first device" includes but is not limited to: shooting video, shooting photo, catching fish, collecting sea urchins, and picking up garbage.

For example, "shoot a 5s coral video", "shoot an image of red coral", "shoot an image of a school of fish", "remember to collect sea urchins", "catch that red sea fish", or "pick up the garbage under your feet".

In some embodiments of this application, the "passing a user status of a user of the second device to the user of the first device" includes but is not limited to: an oxygen content status in the oxygen tank carried by the user, a health status of the user, and a safety status of the diving equipment carried by the user.

For example: "I'm fine, oxygen in my oxygen tank is sufficient", "Oxygen in my oxygen tank is insufficient, I need to replace the oxygen tank", "I am dizzy, I need to go ashore for a rest", "My foot is cramping, I need to surface", "My diving mask has cracks, I need to go ashore as soon as possible", or "I can continue diving down".

In some embodiments of this application, the "passing inquiry information to the user of the first device" includes but is not limited to: inquiring the user's user status, inquiring the user's orientation, inquiring the user's shooting task, and inquiring the user's current diving distance.

For example, the "notification message for passing inquiry information to the user of the first device" may include but is not limited to: "Can you continue diving down?", "Is the oxygen in your oxygen tank sufficient?", "Have you completed your shooting task?", "Have you taken the photo for me yet?", or "What depth have you dived to?"

In some embodiments of this application, the at least one message identifier is constantly displayed in the shooting preview interface. This facilitates the user in communicating with other contacts at any time.

In some embodiments of this application, after the second device displays the communication window between the first contact and the second contact, the user may control, through one input, the second device to display at least one message identifier in the shooting preview interface.

For example, after the second device displays the communication window between the first contact and the second contact, the communication window can be displayed in the shooting preview interface in a small window mode. Subsequently, if the second contact wants to communicate with the first contact, the second contact can control, through one input, the second device to display at least one message identifier in the shooting preview interface.

In some embodiments of this application, a control of diving control and a notification control are displayed in the shooting preview interface. The user can select the control of diving control to control the second device to display, in the shooting preview interface, a message identifier indicating the diving control information; or the user can select the notification control to control the second device to display, in the shooting preview interface, a message identifier indicating the notification information.

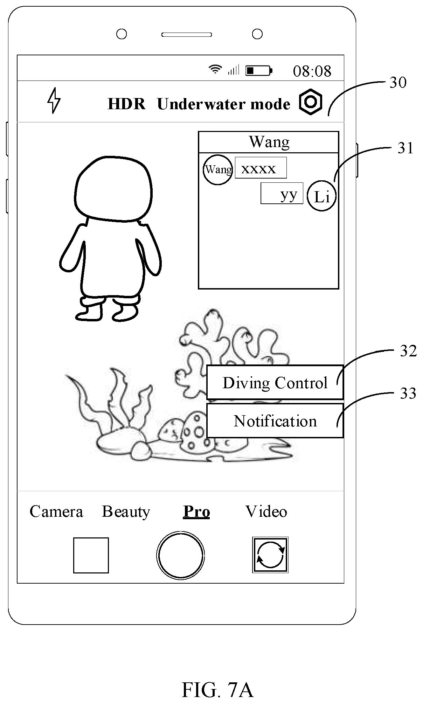

Example 7: With reference to Example 1, taking the second device as the mobile phone of "Li" and the first device as the mobile phone of "Wang" as an example, with reference to FIG. 4A, the mobile phone of "Li" displays the contact window 12 of the personal communication program A in the shooting preview interface 10. If "Li" wants to communicate with "Wang", "Li" can perform an air tap the contact sign 13 of "Wang", that is, the second input, to control the mobile phone to display the communication interface 31 between "Li" and "Wang" in the personal communication program A. As shown in FIG. 7A, the communication interface 31 can be displayed in the shooting preview interface in the form of a small window, and a "Diving control" control 32 and a "Notification" control 33 are displayed in the shooting preview interface.

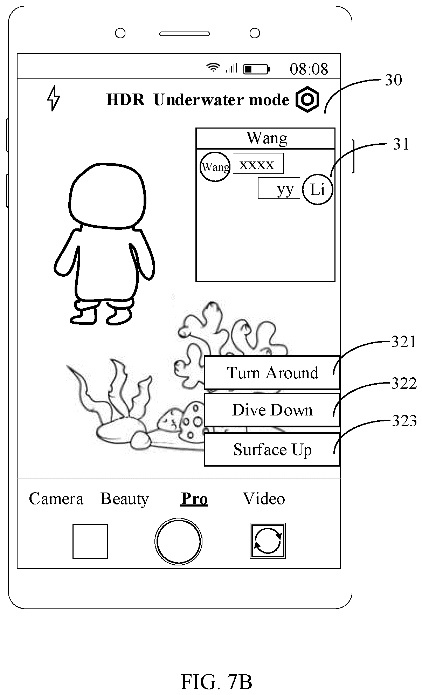

Further, if "Li" wants to take a frontal photo of "Wang" together with the coral, but "Wang" is currently facing away from "Li", "Li" can perform an air tap on the "Diving Control" control 32 to control the mobile phone to display three message identifiers in the shooting preview interface: "Turn around" message identifier 321, "Dive down" message identifier 322, and "Surface up" message identifier 323, as shown in FIG. 7B.

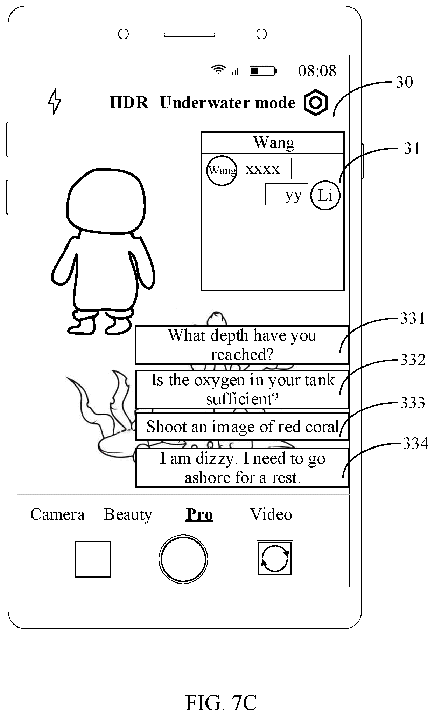

Further, if "Li" wants to know the current diving depth of "Wang", "Li" can perform an air tap on the "Notification" control 33 to control the mobile phone to display four message identifiers in the shooting preview interface: message identifier 331 of "What depth have you reached?", message identifier 332 of "Is the oxygen in your oxygen tank sufficient?", message identifier 333 of "Shoot an image of red coral", and message identifier 334 of "I am dizzy, I need to go ashore for a rest", as shown in FIG. 7C.

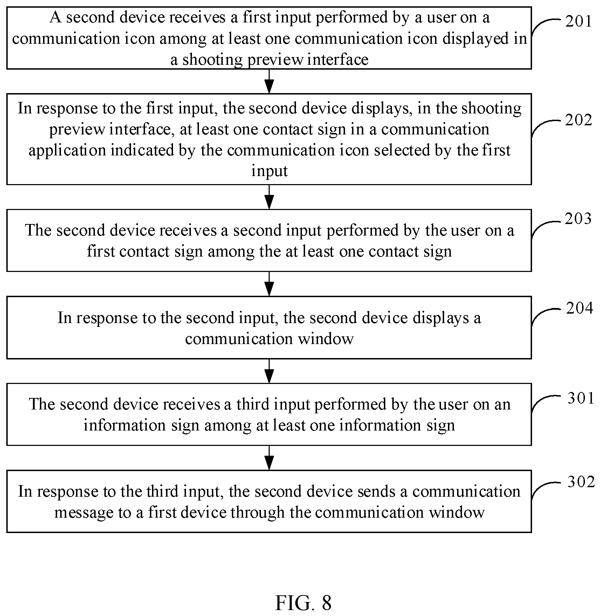

In some embodiments of this application, with reference to FIG. 1, as shown in FIG. 8, after the step 204, the communication method according to the embodiments of this application further includes the following step 301 and step 302.

Step 301: The second device receives a third input performed by the user on an information sign among the at least one information sign.

In some embodiments of this application, the third input is used to select an information sign, and the information sign indicates communication information.

In some embodiments of this application, the third input includes an air gesture input, an input performed by the user on a physical key on the second device, or a press input performed by the user on a screen of the second device.

For example, the third input may be an air tap input performed by the user on a contact sign.

For example, the third input includes an input performed by the user on a physical key on the second device.

For example, the physical key on the second device may be: a volume up key, a volume down key, a power key, or any physical key in the second device.

For example, the "input performed by the user on a physical key on the second device" may be an input performed by the user on one physical key on the second device, an input performed by the user on multiple physical keys on the second device, or an input performed by the user on a combination of physical keys.

For example, the third input may include a press input performed by the user on the volume down key and a press input performed by the user on the audio up key. For example, assuming that the user wants to select a contact sign 1 displayed in the shooting preview interface, the user can control, through a press input on the volume down key, the second device to select the contact sign 1 among multiple contact signs displayed in the shooting preview interface, and then control, through a press input on the volume up key, the second device to confirm the selection of the contact sign 1, thereby controlling the second device to display a communication interface between a contact corresponding to the second device and a contact indicated by the contact sign 1.

For example, the third input may be a press input performed by the user on a screen area of the screen of the second device.

It should be noted that for the specific description of the third input, reference may be made to the detailed description of the first input above. To avoid repetition, details are not repeated herein.

Step 302: In response to the third input, the second device sends a communication message to the first device through the communication window.

In some embodiments of this application, the communication message includes communication information indicated by the information sign selected by the third input.

In some embodiments of this application, after receiving the third input, the second device displays, in a message sending box of the communication window, information content of the communication information indicated by the information sign selected by the third input, and after the user controls the second device to send the message, sends the communication information to the first device of the first contact corresponding to the communication window through a communication application corresponding to the communication window.

In some embodiments of this application, after receiving the third input, the second device directly sends the communication information to the first device of the first contact corresponding to the communication window through a communication application corresponding to the communication window.

It should be noted that if the communication window is a session window, the second device and the first device may display, in the session window, the communication information sent by the second device. If the communication window is a video call window, the second device may display a prompt that the communication information is sent successfully. In this case, the video call window of the first device may display one bullet comment to display the communication information sent by the second device.

Example 8: With reference to Example 7, for the above scenario 1, if "Li" wants to take a frontal photo of "Wang" together with the coral, since "Wang" is currently facing away from "Li", with reference to FIG. 7B, "Li" can perform an air tap on the "Turn around" message identifier 321 to control the mobile phone to send a message containing the information "Turn around" to the mobile phone of "Wang" in the communication interface 31 through the personal communication program A. After "Wang" views the message and turns around, "Li" can use a gesture to instruct "Wang" to move closer to the coral, so as to complete the shooting task.

Example 9: With reference to Example 7, for the above scenario 2, if "Li" wants to know the current diving depth of "Wang", with reference to FIG. 7C, "Li" can perform an air tap on the message identifier 331 of "What depth have you reached?" to control the mobile phone to send a message containing the information "What depth have you reached?" to the mobile phone of "Wang" in the communication interface 31 through the personal communication program A, so that after viewing the message, "Wang" can reply to "Li" with the current diving depth.

In this way, since the second device can display at least one information sign, the user can send the communication message indicated by the information sign by simply selecting the information sign, without needing to edit message content. This reduces the steps that the user needs to perform in the communication process, thereby improving the convenience of underwater communication.

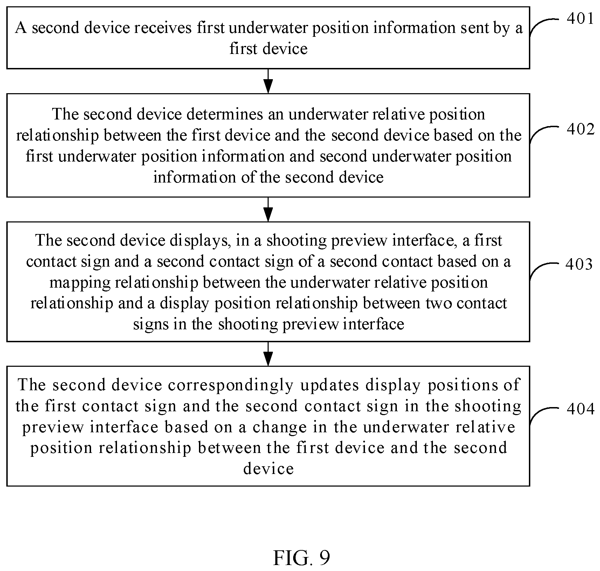

In some embodiments of this application, as shown in FIG. 9, the communication method according to the embodiments of this application further includes the following steps 401 to 404.

Step 401: The second device receives first underwater position information sent by the first device.

In some embodiments of this application, the first underwater position information includes: height information of the first device underwater relative to water surface, and latitude and longitude information of a position of the first device.

Step 402: The second device determines an underwater relative position relationship between the first device and the second device based on the first underwater position information and second underwater position information of the second device.

In some embodiments of this application, the second underwater position information includes: height information of the second device underwater relative to the water surface, and latitude and longitude information of a position of the second device.

It should be noted that the height information of the device underwater relative to water surface refers to: height information of a vertical height from the device to a horizontal plane.

It should be noted that the latitude and longitude information of a position of the device refers to: latitude and longitude information of a current position of the device.

In some embodiments of this application, the underwater relative position relationship between the first device and the second device includes: a height difference between a height of the first device underwater relative to water surface and a height of the second device underwater relative to the water surface, and a horizontal distance difference between the first device and the second device.

For example, it is assumed that: the vertical height of device 1 from the horizontal plane is H1, the latitude and longitude of the current position of device 1 is (M1, N1), the vertical height of device 2 from the horizontal plane is H2, and the latitude and longitude of the current position of device 2 is (M2, N2). Then, based on the latitude and longitude (M1, N1) and the latitude and longitude (M2, N2), a horizontal relative distance L between device 1 and device 2 and a horizontal relative direction F between device 1 and device 2 can be calculated. In this case, the relative position between device 1 and device 2 can be considered as follows: the horizontal relative distance between device 1 and device 2 is L, the horizontal relative direction between device 1 and device 2 is direction F, and the height difference between device 1 and device 2 is H1-H2.

For example, it is assumed that: the vertical height of device 1 from the horizontal plane is 10 m, the latitude and longitude of the current position of device 1 is (120, 39.5), the vertical height of device 2 from the horizontal plane is 5 m, and the latitude and longitude of the current position of device 2 is (120, 39.5001). In this case, device 1 is located due south of device 2, the horizontal relative distance between device 1 and device 2 is approximately 11 m, and the height difference is 5 m.

Step 403: The second device displays, in the shooting preview interface, the first contact sign and a second contact sign of the second contact based on a mapping relationship between the underwater relative position relationship between the first device and the second device and a display position relationship between two contact signs in the shooting preview interface.

In some embodiments of this application, the first contact sign includes at least one of the following: a first contact icon, and an environment image of an actual underwater position of the first device.

In some embodiments of this application, the second contact sign includes at least one of the following: a second contact icon, and an environment image of an actual underwater position of the second device.

In some embodiments of this application, the environment image of an actual underwater position of the first device may be a real-time shooting preview image shared by the first device to the second device.

In some embodiments of this application, the environment image of an actual underwater position of the second device may be a real-time shooting preview image captured by the second device.

In some embodiments of this application, the second device may determine, based on an interface size of the shooting preview interface, the mapping relationship between the underwater relative position relationship between the first device and the second device and the display position relationship between two contact signs in the shooting preview interface.

It can be understood that a distance between the display positions of the two contact signs in the shooting preview interface is related to an actual horizontal distance. That is, in a case that the actual distance between the devices corresponding to the two contact signs decreases, the distance between the two contact signs in the shooting preview interface decreases.

In some embodiments of this application, the second device may determine, based on an interface size of the shooting preview interface and an initial underwater relative position relationship between the first device and the second device, the mapping relationship between the underwater relative position relationship between the first device and the second device and the display position relationship between two contact signs in the shooting preview interface.

For example, the initial underwater relative position relationship between the first device and the second device is an underwater relative position relationship between the first device and the second device that is determined for the first time.

For example, the second device may determine, based on the interface size of the shooting preview interface and an initial underwater horizontal relative distance between the first device and the second device, a horizontal mapping relationship between an underwater horizontal relative distance between the first device and the second device and a horizontal display position relationship between two contact signs in the shooting preview interface.

For example, if the interface width of the shooting preview interface is 8 cm, and the initial underwater horizontal relative distance between the first device and the second device is 80 meters, the horizontal mapping relationship may be 1000:1. That is, for every 10 meters the first device and the second device approach each other in the horizontal dimension, the horizontal distance between the display positions of the two contact signs in the shooting preview interface decreases by 1 cm.

For example, the second device may determine, based on the interface size of the shooting preview interface and an initial underwater vertical relative distance between the first device and the second device, a vertical mapping relationship between an underwater vertical relative distance between the first device and the second device and a vertical display position relationship between two contact signs in the shooting preview interface.

For example, if the interface height of the shooting preview interface is 15 cm, and the initial underwater vertical relative distance between the first device and the second device is 45 meters, the vertical mapping relationship may be 300:1. That is, every 3 meters the first device and the second device approach each other in the vertical dimension, the vertical distance between the display positions of the two contact signs in the shooting preview interface decreases by 1 cm.

In some embodiments of this application, the shooting preview interface includes a coordinate system, where the coordinate system includes a horizontal coordinate axis and a vertical coordinate axis, the horizontal coordinate axis is used to reflect a horizontal relative position between devices, and the vertical coordinate axis is used to reflect a vertical relative position between devices.

For example, the scale interval and the per-scale step size on the horizontal coordinate axis of the coordinate system are determined based on the horizontal mapping relationship. For example, assuming that the horizontal mapping relationship may be 1000:1, if the scale unit of the horizontal coordinate axis is meters, the per-scale step size corresponding to one scale interval of the horizontal coordinate axis is 10 meters.

For example, the scale interval and the per-scale step size on the vertical coordinate axis of the coordinate system are determined based on the vertical mapping relationship. For example, assuming that the vertical mapping relationship may be 300:1, if the scale unit of the vertical coordinate axis is meters, the per-scale step size corresponding to one scale interval of the vertical coordinate axis is 3 meters.

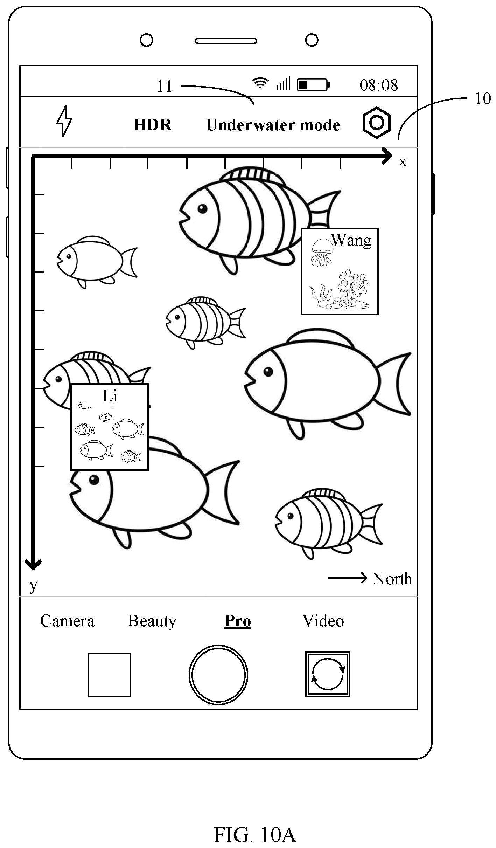

For example, taking the second device as the mobile phone of "Li" and the first device as the mobile phone of "Wang" as an example, after obtaining the underwater position information sent by the mobile phone of "Wang", the mobile phone of "Li" determines that the mobile phone of "Wang" has a vertical height of 9 meters from the horizontal plane and is located at latitude and longitude (M2, N2). In this case, the mobile phone of "Li" has a vertical height of 21 meters from the horizontal plane and is located at latitude and longitude (M1, N1). Next, the mobile phone of "Li" determines, through calculation, that the height difference between "Li" and "Wang" is 12 meters, the horizontal distance between "Wang" and "Li" is 60 meters, and "Wang" is to the north of "Li". In this case, as shown in FIG. 10A, the shooting preview interface 10 includes a coordinate system, where the coordinate system includes a horizontal coordinate axis X and a vertical coordinate axis Y, the horizontal coordinate axis X is the horizontal distance between devices, the vertical coordinate axis Y is the height of the device from the horizontal plane, the arrow direction of the horizontal coordinate axis X indicates north, the contact sign of "Li" is displayed at the 20-meter scale of the horizontal coordinate axis and the 21-meter scale of the vertical coordinate axis, that is, at the coordinate point (2, 7) in the coordinate system, and the contact sign of "Wang" is displayed at the intersection of the 80-meter scale of the horizontal coordinate axis and the 9-meter scale of the vertical coordinate axis, that is, at the coordinate point (8, 3) in the coordinate system.

It should be noted that a correspondence between the actual length displayed on the screen for a unit scale on the coordinate axis of the coordinate system and the scale value indicated by that unit scale may be considered as the fixed mapping relationship described above.

Step 404: The second device correspondingly updates display positions of the first contact sign and the second contact sign in the shooting preview interface based on a change in the underwater relative position relationship between the first device and the second device.

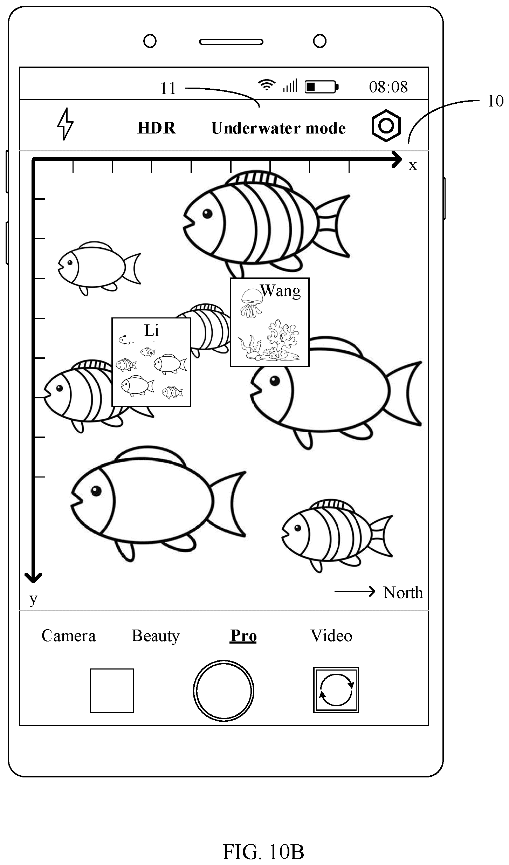

For example, with reference to FIG. 10A, if the positions of both "Li" and "Wang" change, it is assumed that: after the position change, "Li" has a vertical height of 15 meters from the horizontal plane, "Wang" has a vertical height of 12 meters from the horizontal plane, the horizontal distance between "Wang" and "Li" is 30 meters, and "Wang" is located to the north of "Li". As shown in FIG. 10B, contact sign of "Li" is displayed at the intersection of the 30-meter scale of the horizontal coordinate axis and the 15-meter scale of the vertical coordinate axis, that is, at the coordinate point (3, 5) in the coordinate system, and the contact sign of "Wang" is displayed at the intersection of the 60-meter scale of the horizontal coordinate axis and the 12-meter scale of the vertical coordinate axis, that is, at the coordinate point (6, 4) in the coordinate system.

In this way, since the second device can receive the underwater position information of the first device and display the contact sign in the shooting preview interface based on the relative position relationship with the first device, the user can more intuitively obtain the relative positions and distances between themselves and other users. This improves the convenience of finding other users, and further reduces the risk of users getting lost, ensuring the personal safety of users.

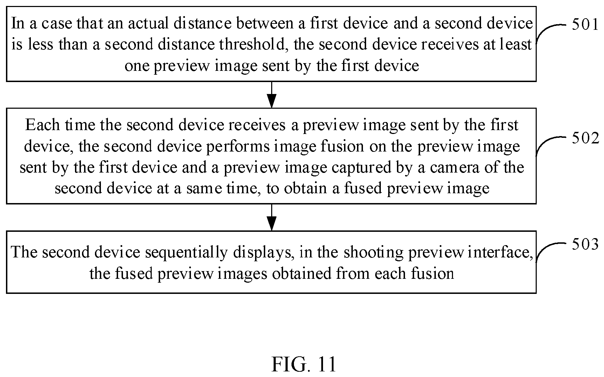

In some embodiments of this application, as shown in FIG. 11, the communication method according to the embodiments of this application further includes the following steps 501 to 503.

Step 501: In a case that an actual distance between the first device and the second device is less than a second distance threshold, the second device receives at least one preview image sent by the first device.

Step 502: Each time the second device receives a preview image sent by the first device, the second device performs image fusion on a preview image sent by the first device and a preview image captured by a camera of the second device at a same time, to obtain a fused preview image.

Step 503: The second device sequentially displays, in the shooting preview interface, the fused preview images obtained from each fusion.

It can be understood that in a case that the actual distance between the first device and the second device is relatively small, the first device and the second device capture images of a same shooting scene. Therefore, when the first device and the second device gradually approach each other, the two devices capture the same or similar shooting preview images. In this case, the second device can present to the user a display animation that the preview images of the two devices gradually fuse.

In some embodiments of this application, when performing image fusion, the second device can perform fusion using at least two fusion methods.

Method 1: The second device directly splices the two preview images to obtain the fused preview image.

Method 2: The second device performs de-duplication and fusion on the two preview images to obtain the fused preview image. Specifically, the second device can identify identical image content and differing image content in the two preview images, remove the identical image content in one preview image as a redundant image block to implement image de-duplication. Then, the image content in this preview image that differs from the other preview image can be fused with the other preview image to obtain the fused preview image.

In some embodiments of this application, the second device can share its captured real-time shooting preview image with the first device, that is, the second device continuously sends multiple preview image frames to the second device. In this case, based on the capture time of each of the multiple preview image frames, the second device can sequentially fuse such image frame with the image frame captured by itself at the same moment, frame by frame. This allows the user to view a fused real-time preview image in the shooting preview interface.

In this way, by fusing the preview images captured by the two devices, the second device can expand the field of view of the underwater images that the user can see, allowing the user to see both the underwater image captured by their device and the underwater images captured by the cameras of other devices, thereby improving the flexibility and fun of image display.

In some embodiments of this application, the communication method according to the embodiments of this application further includes the following step 601.

Step 601: The second device displays navigation prompt information in the shooting preview interface.

In some embodiments of this application, the navigation prompt information includes at least one of the following: navigation direction prompt information, and actual distance information between the first device and the second device.

In some embodiments of this application, the navigation direction prompt information includes navigation prompt information in a horizontal plane direction and navigation prompt information in a vertical plane direction.

In some embodiments of this application, the navigation direction prompt information includes but is not limited to at least one of the following: a distance displayed in text form, a direction displayed in text form, and a direction indicated in icon form.

In some embodiments of this application, an icon indicating the direction may be a 3D stereo icon.

In some embodiments of this application, the second device directly displays the navigation prompt information in the shooting preview interface; or the second device displays a navigation window in the shooting preview interface, where the navigation prompt information is displayed in the navigation window.

For example, the navigation window may be a floating window.

For example, a window background in the navigation window may be in a transparent state.

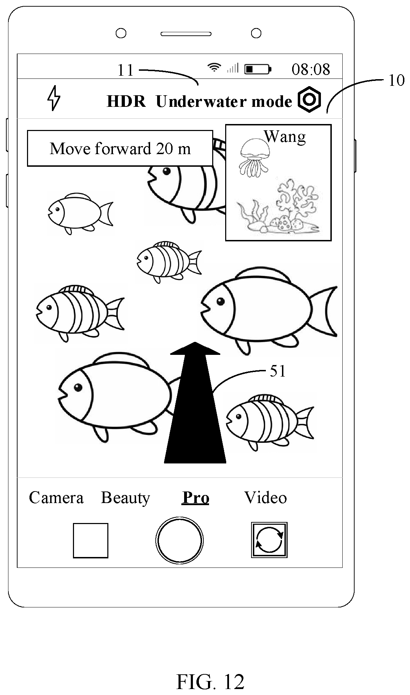

For example, taking the second device as the mobile phone of "Li" as an example, with reference to FIG. 2, in the scenario where "Li" and "Wang" are diving together for shooting, if "Li" wants to know the specific position of "Wang", "Li" can perform an air tap on the program icon c of the map application in the shooting preview interface 10, that is, the first input. In this case, the mobile phone of "Li" can display a contact window of the map application in the shooting preview interface 10, where the contact window may include three contact signs: the contact sign of "Wang", the contact sign of "Zhang", and the group identifier of "Underwater shooting group". Through an air input, "Li" can control the mobile phone to select the contact sign of "Wang". In this case, as shown in FIG. 12, the shooting preview interface 10 on the mobile phone of "Li" displays the navigation route information between "Li" and "Wang", such as "Move forward 20 m", along with an arrow 51 indicating the moving direction.

Since underwater lighting is poor and users are wearing the diving apparatus, it is not easy for the user to locate companions. Therefore, through the navigation prompt information displayed on the second device, the user can learn how to find other users, enabling the user to locate companions more conveniently. This improves the convenience of locating the positions of other users and further reduces the risk of the user getting separated from other users.

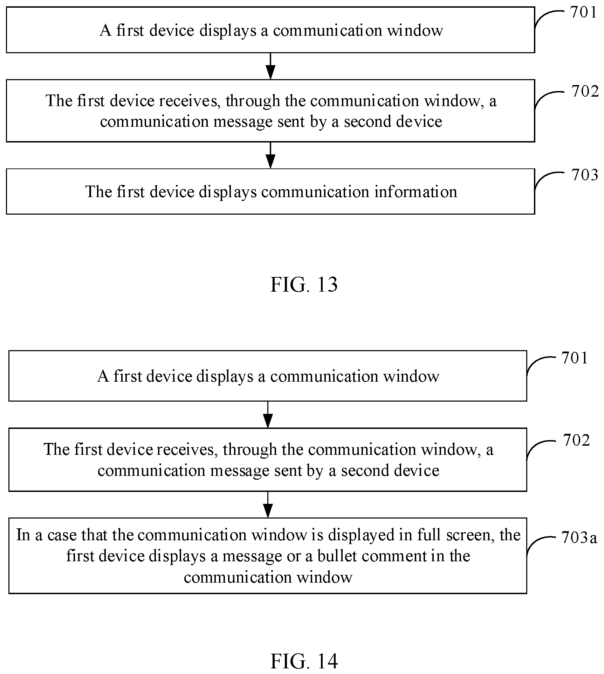

Embodiments of this application provide a communication method. FIG. 13 is a flowchart of a communication method according to an embodiment of this application. As shown in FIG. 13, the communication method according to the embodiment of this application may include the following steps 701 to 703.

Step 701: A first device displays a communication window.

In some embodiments of this application, the communication window is a communication window between a first contact and a second contact. The first contact is a contact corresponding to the first device, and the second contact is a contact corresponding to a second device.

In some embodiments of this application, the communication window includes at least one of the following: a session window, and a video call window.

In some embodiments of this application, in a case that the communication window includes a session window, the first contact and the second contact may perform information exchange by transmitting communication messages.

In some embodiments of this application, in a case that the communication window includes a video call window, the first contact and the second contact can view each other through video or view a shooting preview image acquired by the device of the other party.

In some embodiments of this application, the first device may display the communication window in full screen.

In some embodiments of this application, the communication window may be a floating window, that is, the communication window may be displayed floating in the shooting preview interface.

For example, a window background of the communication window may be in a transparent state, allowing the user to view a preview image below the communication window through the communication window. This can prevent the communication window from blocking the shooting preview image displayed in the shooting preview interface, allowing the user to view both the communication message and the preview image captured by the first device.

In some embodiments of this application, the first device may display the communication window at any position in the shooting preview interface.

In some embodiments of this application, a window size and a display position of the communication window can be adjusted.

For example, the user flexibly adjusts the window size of the communication window through an air gesture input. For example, the user controls, through a two-finger air pinch input, the second device to reduce the window size of the communication window through a two-finger air pinch input, or the user controls, through a two-finger air spread input, the first device to increase the window size of the communication window.

For example, the user drags, through an air drag input, the communication window to move, and the communication window can move in the shooting preview interface with the drag operation of the user.

Step 702: The first device receives, through the communication window, a communication message sent by the second device.

In some embodiments of this application, the communication message includes communication information, and the communication information is information indicated by an information sign selected by a user of the second device from at least one information sign.

In some embodiments of this application, the communication information includes at least one of the following: diving control information, and notification information.

In some embodiments of this application, in a case that the communication information includes the diving control information, the diving control information includes control information for controlling adjustment of a diving posture or a diving action, and the diving control information is used to indicate a user of the first device to adjust a diving posture or a diving action.

In some embodiments of this application, in a case that the communication information includes the notification information, the notification information includes at least one of the following: notification information for passing a to-do item to a user of the first device, notification information for passing a user status of the user of the second device to the user of the first device, and notification information for passing inquiry information to the user of the first device.

It should be noted that for details about the diving control information and the notification information, reference may be made to the detailed description above. Details are not repeated herein.

In some embodiments of this application, the first device receives, in the communication window through a communication application corresponding to the communication window, the communication information sent by the second device.

Step 703: The first device displays the communication information.

In some embodiments of this application, with reference to FIG. 13, as shown in FIG. 14, the step 703 may be specifically implemented through the following step 703a.

Step 703a: In a case that the communication window is displayed in full screen, the first device displays a message or a bullet comment in the communication window.

In some embodiments of this application, both the message and the bullet comment include communication information.

In some embodiments of this application, in a case that the communication window is displayed in full screen, if the first device receives one piece of communication information in the communication window, the first device may display the communication information in the communication window in the form of a bullet comment, or the first device may display the communication information in the communication window.

For example, when the first device displays the communication information above the communication window in the form of a bullet comment, the bullet comment may be displayed at a fixed position in the communication window, or the bullet comment floats across in the upper part of the communication window.

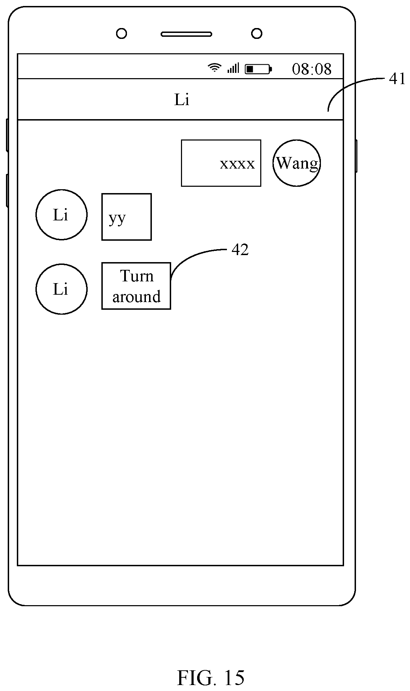

For example, taking the first device as the mobile phone of "Wang" and the second device as the mobile phone of "Li" as an example, as shown in FIG. 15, if the mobile phone of "Wang" receives a message 1 sent by the mobile phone of "Li" through the personal communication program A, and the message content of the message 1 includes "Turn around", the mobile phone of "Li" can display, in full screen, the communication window 41 between "Wang" and "Li" in the personal communication program A, display the message 1, that is, 42 in FIG. 15, in the communication window 41, and display bullet comment 1 in the upper central part of the communication window 41, where bullet comment content of the bullet comment 1 includes "Turn around".

In this way, after the first device receives the communication information sent by the second device, the first device can display the communication window in full screen to display the received information, without exiting the shooting preview interface, thereby reducing the operation steps brought by program switching.

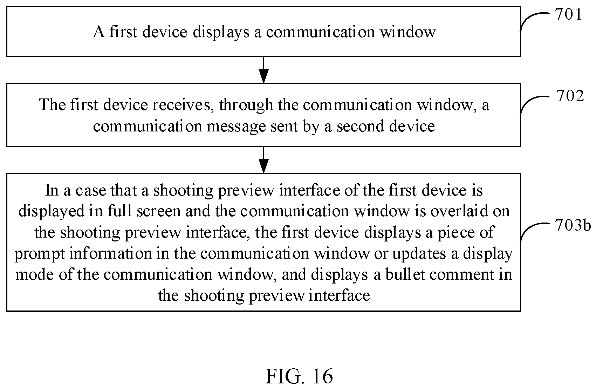

In some embodiments of this application, with reference to FIG. 13, as shown in FIG. 16, the step 703 may be specifically implemented through the following step 703b.

Step 703b: In a case that a shooting preview interface of the first device is displayed in full screen and the communication window is overlaid on the shooting preview interface, the first device displays a piece of prompt information in the communication window or updates a display mode of the communication window, and displays a bullet comment in the shooting preview interface.

In some embodiments of this application, both the prompt information and the bullet comment include communication information.

In some embodiments of this application, the display mode includes at least one of the following: a vibration mode, a highlight display mode, a magnified display mode, and a color change display mode.

In some embodiments of this application, in a case that the shooting preview interface of the first device is displayed in full screen, in order to prevent the communication window from blocking the shooting preview image in the shooting preview interface, the communication window may be overlaid on the shooting preview interface in a small window mode. In this case, to avoid the user of the first device missing the message, the first device may send prompt information or change the display mode of the communication window to remind the user of the first device that a new message has arrived.

In some embodiments of this application, after receiving the communication message, the first device displays the communication message in the shooting preview interface in the form of a bullet comment. This allows the user of the first device to view the detailed content of the communication information without displaying the communication window in full screen, thereby reducing unnecessary message viewing operations.

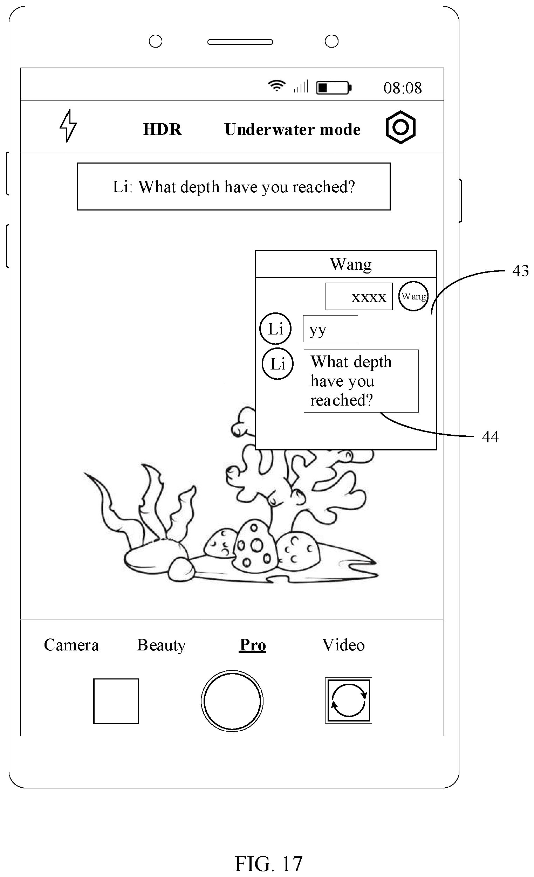

For example, taking the first device as the mobile phone of "Wang" and the second device as the mobile phone of "Li" as an example, as shown in FIG. 17, if the mobile phone of "Wang" receives a message 2 sent by the mobile phone of "Li" through the personal communication program A, and the message content of the message 2 includes "What depth have you reached?", the mobile phone of "Wang" can overlay the communication window 43 between "Wang" and "Li" in the personal communication program A on the shooting preview interface in a small window mode, display the message 2, that is, 44 in FIG. 17, in the communication window 43, and display a bullet comment 2 in the upper central part of the shooting preview interface, where the bullet comment content of the bullet comment 2 includes "What depth have you reached?".

In this way, after the first device receives the communication information sent by the second device, the first device can overlay the communication window on the shooting preview interface to display the received information, without exiting the shooting preview interface, thereby reducing the operation steps brought by program switching.

In the communication method according to the embodiments of this application, the first device can receive the communication message sent by the second device, so that the user of the first device and the user of the second device can directly communicate with each other by transmitting communication messages between the devices without exiting the shooting preview interface, thereby reducing the operation steps brought by program switching. This simplifies the communication process, improves the convenience of user communication, and implements normal communication and interaction between device users in the underwater shooting scenario.

The foregoing method embodiments, or various possible implementations in the various method embodiments may be executed alone, or may be executed in combination with each other in absence of contradictions, which can be determined according to actual usage needs, and is not limited in the embodiments of this application.

It should be noted that the communication method according to the embodiments of this application may be executed by a communication apparatus, or an electronic device, or a functional module or entity in an electronic device. In the embodiments of this application, an electronic device executing the communication method is used as an example to describe a communication apparatus according to an embodiment of this application.

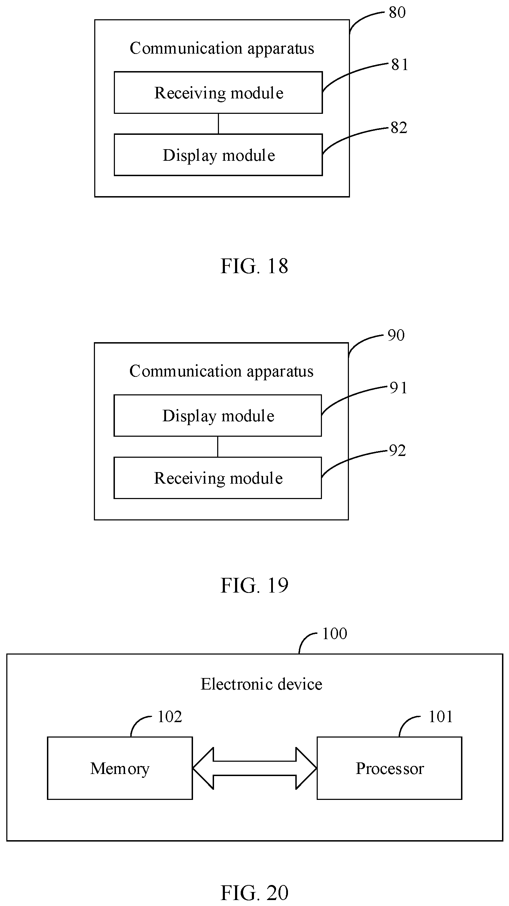

FIG. 18 is a possible schematic structural diagram of a communication apparatus according to an embodiment of this application. As shown in FIG. 18, the communication apparatus 80 may include: a receiving module 81 and a display module 82.

The receiving module 81 is configured to receive a first input performed by a user on a communication icon among at least one communication icon displayed in a shooting preview interface, where the first input is used to select a communication icon, and the communication icon is used to indicate a communication application.

The display module 82 is configured to, in response to the first input received by the receiving module 81, display, in the shooting preview interface, at least one contact sign in a communication application indicated by the communication icon selected by the first input, where the contact sign is used to indicate a contact or a session group in the communication application.

The receiving module 81 is further configured to receive a second input performed by the user on a first contact sign among the at least one contact sign displayed by the display module 82, where the second input is used to select a contact sign, and the first contact sign indicates a first contact.

The display module 82 is further configured to, in response to the second input received by the receiving module 81, display a communication window, where the communication window is a communication window between the first contact and a second contact, the first contact is a contact corresponding to a first device, and the second contact is a contact corresponding to a second device.

In the communication apparatus according to the embodiments of this application, one or more communication icons are displayed in the shooting preview interface, allowing a user to conveniently control the device to bring up a communication window with any contact by operating the communication icons in the shooting preview interface in an underwater shooting scenario, without needing to exit the shooting preview interface. This reduces cumbersome user operation steps for program switching, simplifies the communication process, and improves the convenience of user communication, implementing normal communication and interaction between device users in the underwater shooting scenario.

In a possible implementation, the first input includes an air gesture input or an input performed by the user on a physical key on the second device; the second input includes an air gesture input or an input performed by the user on a physical key on the second device; and the communication window includes at least one of the following: a session window, and a video call window.

In a possible implementation, the shooting preview interface includes: at least one information sign, where the information sign is used to indicate one piece of communication information. The receiving module 81 is further configured to, after the display module 82 displays the communication window, receive a third input performed by the user on an information sign among the at least one information sign, where the third input is used to select an information sign, and the information sign indicates communication information. The communication apparatus 80 according to the embodiments of this application further includes a sending module configured to, in response to the third input received by the receiving module 81, send a communication message to the first device through the communication window, where the communication message includes the communication information indicated by the information sign selected by the third input.

In a possible implementation, the communication information includes at least one of the following: diving control information, and notification information.

In a possible implementation, in a case that the communication information includes the diving control information, the diving control information includes control information for controlling adjustment of a diving posture or a diving action, and the diving control information is used to indicate a user of the first device to adjust a diving posture or a diving action.

In a possible implementation, in a case that the communication information includes the notification information, the notification information includes at least one of the following: notification information for passing a to-do item to a user of the first device, notification information for passing a user status of a user of the second device to the user of the first device, and notification information for passing inquiry information to the user of the first device.

In a possible implementation, the at least one contact sign includes at least one of the following: a contact sign of a contact corresponding to a device with a signal strength greater than a strength threshold, and a contact sign of a contact corresponding to a device whose distance from the second device is less than a first distance threshold and that has established a Bluetooth connection to the second device.

In a possible implementation, the at least one contact sign includes the contact sign of the contact corresponding to the device whose distance from the second device is less than the first distance threshold and that has established a Bluetooth connection to the second device; the second device and the first device have been paired via Bluetooth and have established a Bluetooth connection, and the communication apparatus 80 according to the embodiments of this application further includes a processing module configured to, in a case that a distance between the second device and the first device is greater than the first distance threshold, disconnect the Bluetooth connection between the first device and the second device; and the communication apparatus 80 according to the embodiments of this application further includes a monitoring module configured to monitor a change in distance to the first device; the processing module is further configured to, in a case that the monitoring module detects that the distance to the first device changes from greater than the first distance threshold to less than the first distance threshold, re-establish a Bluetooth connection to the first device; and the display module 82 is further configured to, in a case that the monitoring module detects that the distance to the first device changes from greater than the first distance threshold to less than the first distance threshold, use the contact sign of the contact corresponding to the first device as a contact sign displayable in the shooting preview interface.

In a possible implementation, the receiving module 81 is further configured to receive first underwater position information sent by the first device, where the first underwater position information includes: height information of the first device underwater relative to water surface, and latitude and longitude information of a position of the first device. The communication apparatus 80 according to the embodiments of this application further includes a determining module configured to determine an underwater relative position relationship between the first device and the second device based on the first underwater position information received by the receiving module 81 and second underwater position information of the second device, where the second underwater position information includes: height information of the second device underwater relative to the water surface, and latitude and longitude information of a position of the second device. The display module 82 is further configured to display, in the shooting preview interface, the first contact sign and a second contact sign of the second contact based on a mapping relationship between the underwater relative position relationship determined by the determining module and a display position relationship between two contact signs in the shooting preview interface. The display module 82 is further configured to correspondingly update display positions of the first contact sign and the second contact sign in the shooting preview interface based on a change in the underwater relative position relationship between the first device and the second device. The first contact sign includes at least one of the following: a first contact icon, and an environment image of an actual underwater position of the first device; and the second contact sign includes at least one of the following: a second contact icon, and an environment image of an actual underwater position of the second device.

In a possible implementation, the receiving module 81 is further configured to, in a case that an actual distance between the first device and the second device is less than a second distance threshold, receive at least one preview image sent by the first device. The communication apparatus 80 according to the embodiments of this application further includes a fusion module configured to, each time the receiving module 81 receives a preview image sent by the first device, perform image fusion on the preview image sent by the first device and a preview image captured by a camera of the second device at a same time, to obtain a fused preview image. The display module 82 is further configured to sequentially display, in the shooting preview interface, the fused preview images obtained from each fusion.

In a possible implementation, the display module 82 is further configured to display navigation prompt information in the shooting preview interface, where the navigation prompt information includes at least one of the following: navigation direction prompt information, and actual distance information between the first device and the second device; and the navigation direction prompt information includes navigation prompt information in a horizontal plane direction and navigation prompt information in a vertical plane direction.

In a possible implementation, the display module 82 is further configured to, before the receiving module 81 receives the first input performed by the user on a communication icon among the at least one communication icon displayed in the shooting preview interface, in a case that a shooting environment is detected as an underwater shooting environment, display the at least one communication icon in the shooting preview interface.

FIG. 19 is a possible schematic structural diagram of a communication apparatus according to an embodiment of this application. As shown in FIG. 19, the communication apparatus 90 may include: a display module 91 and a receiving module 92.

The display module 91 is configured to display a communication window, where the communication window is a communication window between a first contact and a second contact, the first contact is a contact corresponding to a first device, and the second contact is a contact corresponding to a second device.

The receiving module 92 is configured to receive, through the communication window displayed by the display module 91, a communication message sent by the second device, where the communication message includes communication information, and the communication information is information indicated by an information sign selected by a user of the second device from at least one information sign.

The display module 91 is configured to display the communication information received by the receiving module 92.

In the communication apparatus according to the embodiments of this application, the first device can receive the communication message sent by the second device, so that the user of the first device and the user of the second device can directly communicate with each other by transmitting communication messages between the devices without exiting the shooting preview interface, thereby reducing the operation steps brought by program switching. This simplifies the communication process, improves the convenience of user communication, and implements normal communication and interaction between device users in the underwater shooting scenario.

In a possible implementation, the communication window includes at least one of the following: a session window, and a video call window.

In a possible implementation, the communication information includes at least one of the following: diving control information, and notification information.

In a possible implementation, in a case that the communication information includes the diving control information, the diving control information includes control information for controlling adjustment of a diving posture or a diving action, and the diving control information is used to indicate a user of the first device to adjust a diving posture or a diving action.

In a possible implementation, in a case that the communication information includes the notification information, the notification information includes at least one of the following: notification information for passing a to-do item to a user of the first device, notification information for passing a user status of the user of the second device to the user of the first device, and notification information for passing inquiry information to the user of the first device.

In a possible implementation, the display module 91 is specifically configured to, in a case that the communication window is displayed in full screen, display a message or a bullet comment in the communication window, where both the message and the bullet comment include the communication information; and in a case that a shooting preview interface of the first device is displayed in full screen and the communication window is overlaid on the shooting preview interface, display a piece of prompt information in the communication window or update a display mode of the communication window, and display a bullet comment in the shooting preview interface, where both the prompt information and the bullet comment include the communication information; and the display mode includes at least one of the following: a vibration mode, a highlight display mode, a magnified display mode, and a color change display mode.

The communication apparatus in the embodiments of this application may be an electronic device or a component in an electronic device, such as an integrated circuit or a chip. The electronic device may be a terminal or another device different from a terminal. For example, the electronic device may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like, or may be a server, a network attached storage (Network Attached Storage, NAS), a personal computer (personal computer, PC), a television (television, TV), a teller machine, a self-service machine, or the like. This is not specifically limited in thee embodiments of this application.

The communication apparatus in the embodiments of this application may be an apparatus having an operating system. The operating system may be an Android (Android) operating system, an iOS operating system, or other possible operating systems, which is not specifically limited in the embodiments of this application.

The communication apparatus according to the embodiments of this application can implement each process implemented by the foregoing method embodiments. To avoid repetition, details are not repeated herein.

Optionally, as shown in FIG. 20, an embodiment of this application further provides an electronic device 100 including a processor 101 and a memory 102. The memory 102 stores a program or instructions executable on the processor 101. When the program or instructions are executed by the processor 101, the steps of the foregoing communication method embodiments can be implemented, with the same technical effects achieved. To avoid repetition, details are not repeated herein.

It should be noted that the electronic device in the embodiments of this application includes the mobile electronic device and non-mobile electronic device described above.

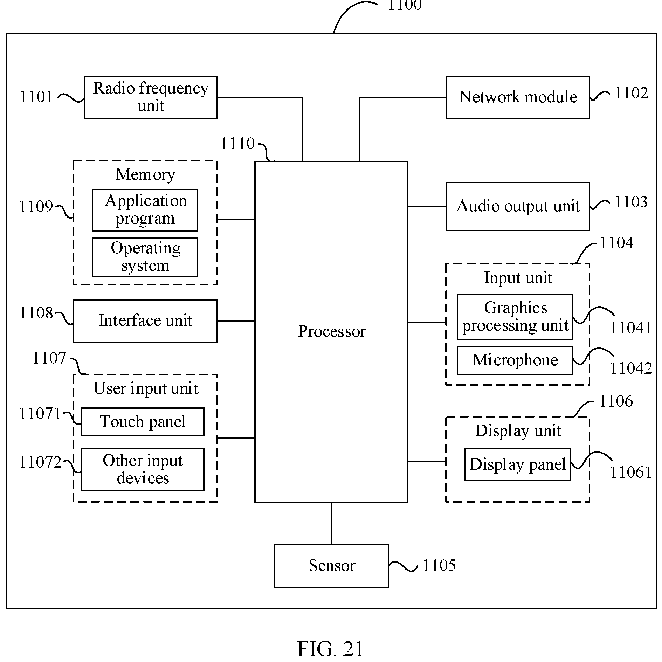

FIG. 21 is a schematic structural diagram of hardware of an electronic device implementing the embodiments of this application.

The electronic device 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Those skilled in the art can understand that the electronic device 1100 may further include a power supply (such as a battery) supplying power to components, and the power supply may be logically connected to the processor 110 through a power management system, so as to implement functions such as charging management, discharging management, and power consumption management through the power management system. The structure of the electronic device shown in FIG. 21 does not constitute any limitation on the electronic device. The electronic device may include more or fewer components than shown in the figure, or a combination of some components, or the components disposed differently. Details are not described herein.

The following takes the electronic device 1100 as the second device as an example.

The user input unit 1107 is configured to receive a first input performed by a user on a communication icon among at least one communication icon displayed in a shooting preview interface, where the first input is used to select a communication icon, and the communication icon is used to indicate a communication application.

The display unit 1106 is configured to, in response to the first input received by the user input unit 1107, display, in the shooting preview interface, at least one contact sign in a communication application indicated by the communication icon selected by the first input, where the contact sign is used to indicate a contact or a session group in the communication application.

The user input unit 1107 is further configured to receive a second input performed by the user on a first contact sign among the at least one contact sign displayed by the display unit 1106, where the second input is used to select a contact sign, and the first contact sign indicates a first contact.

The display unit 1106 is further configured to, in response to the second input received by the user input unit 1107, display a communication window, where the communication window is a communication window between the first contact and a second contact, the first contact is a contact corresponding to a first device, and the second contact is a contact corresponding to a second device.

The electronic device according to the embodiments of this application directly displays one or more communication icons in the shooting preview interface, so that in an underwater shooting scenario, a user can directly communicate, through the communication icons in the shooting preview interface, with contacts in the communication application indicated by the communication icon without exiting the shooting preview interface, thereby reducing the operation steps brought by program switching. This simplifies the communication process, improves the convenience of user communication, and implements normal communication and interaction between device users in the underwater shooting scenario.

Optionally, the first input includes an air gesture input or an input performed by the user on a physical key on the second device; the second input includes an air gesture input or an input performed by the user on a physical key on the second device; and the communication window includes at least one of the following: a session window, and a video call window.

Optionally, the shooting preview interface includes: at least one information sign, where the information sign is used to indicate one piece of communication information. The user input unit 1107 is further configured to, after the display unit 1106 displays the communication window, receive a third input performed by the user on an information sign among the at least one information sign, where the third input is used to select an information sign, and the information sign indicates communication information. The processor 1110 is configured to, in response to the third input received by the user input unit 1107, send a communication message to the first device through the communication window, where the communication message includes the communication information indicated by the information sign selected by the third input.

Optionally, the communication information includes at least one of the following: diving control information, and notification information.

Optionally, in a case that the communication information includes the diving control information, the diving control information includes control information for controlling adjustment of a diving posture or a diving action, and the diving control information is used to indicate a user of the first device to adjust a diving posture or a diving action.

Optionally, in a case that the communication information includes the notification information, the notification information includes at least one of the following: notification information for passing a to-do item to a user of the first device, notification information for passing a user status of a user of the second device to the user of the first device, and notification information for passing inquiry information to the user of the first device.

Optionally, the at least one contact sign includes at least one of the following: a contact sign of a contact corresponding to a device with a signal strength greater than a strength threshold, and a contact sign of a contact corresponding to a device whose distance from the second device is less than a first distance threshold and that has established a Bluetooth connection to the second device.

Optionally, the at least one contact sign includes the contact sign of the contact corresponding to the device whose distance from the second device is less than the first distance threshold and that has established a Bluetooth connection to the second device. The second device and the first device have been paired via Bluetooth and have established a Bluetooth connection. The processor 1110 is configured to, in a case that a distance between the second device and the first device is greater than the first distance threshold, disconnect the Bluetooth connection between the first device and the second device. The processor 1110 is configured to monitor a change in distance to the first device. The processor 1110 is further configured to, in a case of detecting that the distance to the first device changes from greater than the first distance threshold to less than the first distance threshold, re-establish a Bluetooth connection to the first device, and use the contact sign of the contact corresponding to the first device as a contact sign displayable in the shooting preview interface.

Optionally, the user input unit 1107 is further configured to receive first underwater position information sent by the first device, where the first underwater position information includes: height information of the first device underwater relative to water surface, and latitude and longitude information of a position of the first device. The processor 1110 is configured to determine an underwater relative position relationship between the first device and the second device based on the first underwater position information received by the user input unit 1107 and second underwater position information of the second device, where the second underwater position information includes: height information of the second device underwater relative to the water surface, and latitude and longitude information of a position of the second device. The display unit 1106 is further configured to display, in the shooting preview interface, the first contact sign and a second contact sign of the second contact based on a mapping relationship between the underwater relative position relationship determined by the processor 1110 and a display position relationship between two contact signs in the shooting preview interface. The processor 1110 is configured to correspondingly update display positions of the first contact sign and the second contact sign displayed by the display unit 1106 in the shooting preview interface based on a change in the underwater relative position relationship between the first device and the second device. The first contact sign includes at least one of the following: a first contact icon, and an environment image of an actual underwater position of the first device; and the second contact sign includes at least one of the following: a second contact icon, and an environment image of an actual underwater position of the second device.

Optionally, the user input unit 1107 is further configured to, in a case that an actual distance between the first device and the second device is less than a second distance threshold, receive at least one preview image sent by the first device. The processor 1110 is configured to, each time the user input unit 1107 receives a preview image sent by the first device, perform image fusion on the preview image sent by the first device and a preview image captured by a camera of the second device at the same moment, to obtain a fused preview image. The display unit 1106 is further configured to sequentially display, in the shooting preview interface, the fused preview images obtained from each fusion.

Optionally, the display unit 1106 is further configured to display navigation prompt information in the shooting preview interface, where the navigation prompt information includes at least one of the following: navigation direction prompt information, and actual distance information between the first device and the second device; and the navigation direction prompt information includes navigation prompt information in a horizontal plane direction and navigation prompt information in a vertical plane direction.

Optionally, the display unit 1106 is further configured to, before the user input unit 1107 receives the first input performed by the user on a communication icon among the at least one communication icon displayed in the shooting preview interface, in a case that the shooting environment is detected as an underwater shooting environment, display the at least one communication icon in the shooting preview interface.

The following takes the electronic device 1100 as the first device as an example.

The display unit 1106 is configured to display a communication window, where the communication window is a communication window between a first contact and a second contact, the first contact is a contact corresponding to the first device, and the second contact is a contact corresponding to a second device.

The user input unit 1107 is configured to receive, through the communication window displayed by the display unit 1106, a communication message sent by the second device, where the communication message includes communication information, and the communication information is information indicated by an information sign selected by a user of the second device from at least one information sign.

The display unit 1106 is configured to display the communication information received by the user input unit 1107.

In the electronic device according to the embodiments of this application, the first device can receive the communication message sent by the second device, so that the user of the first device and the user of the second device can directly communicate with each other by transmitting communication messages between devices without exiting the shooting preview interface, thereby reducing the operation steps brought by program switching. This simplifies the communication process, improves the convenience of user communication, and implements normal communication and interaction between device users in the underwater shooting scenario.

Optionally, the communication window includes at least one of the following: a session window, and a video call window.

Optionally, the communication information includes at least one of the following: diving control information, and notification information.

Optionally, in a case that the communication information includes the diving control information, the diving control information includes control information for controlling adjustment of a diving posture or a diving action, and the diving control information is used to indicate a user of the first device to adjust a diving posture or a diving action.

Optionally, in a case that the communication information includes the notification information, the notification information includes at least one of the following: notification information for passing a to-do item to a user of the first device, notification information for passing a user status of the user of the second device to the user of the first device, and notification information for passing inquiry information to the user of the first device.

Optionally, the display unit 1106 is specifically configured to, in a case that the communication window is displayed in full screen, display a message or a bullet comment in the communication window, where both the message and the bullet comment include the communication information; and the display unit 1106 is further configured to, in a case that a shooting preview interface of the first device is displayed in full screen and the communication window is overlaid on the shooting preview interface, display a piece of prompt information in the communication window or update a display mode of the communication window, and display a bullet comment in the shooting preview interface, where both the prompt information and the bullet comment include the communication information; and the display mode includes at least one of the following: a vibration mode, a highlight display mode, a magnified display mode, and a color change display mode.

The electronic device according to the embodiments of this application can implement each process implemented by the foregoing method embodiments, with the same technical effects achieved. To avoid repetition, details are not repeated herein.

For the specific beneficial effects of various implementations in this embodiment, reference may be made to the beneficial effects of the corresponding implementations in the foregoing method embodiments. To avoid repetition, details are not repeated herein.

It should be understood that in the embodiments of this application, the input unit 1104 may include a graphics processing unit (Graphics Processing Unit, GPU) 1041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or an on/off key), a trackball, a mouse, and a joystick. Details are not described herein.

The memory 1109 may be configured to store a software program or instructions and various data. The memory 1109 may mainly include a first storage area for storing programs or instructions and a second storage area for storing data. The first storage area may store an operating system, an application program or instructions required by at least one function (for example, a sound play function or an image play function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 1109 in the embodiments of this application includes but is not limited to these and any other suitable types of memories.

The processor 1110 may include one or more processing units. Optionally, the processor 1110 integrates an application processor and a modem processor. The application processor mainly processes operations related to an operating system, a user interface, an application program, or the like. The modem processor, such as a baseband processor, mainly processes wireless communication signals. It can be understood that the modem processor may alternatively be not integrated into the processor 1110.

An embodiment of this application further provides a readable storage medium, where the readable storage medium stores a program or instructions, and when the program or instructions are executed by a processor, each process of the foregoing method embodiments is implemented, with the same technical effects achieved. To avoid repetition, details are not repeated herein.

The processor is the processor in the electronic device described in the foregoing embodiments. The readable storage medium includes a computer-readable storage medium, such as a computer read-only memory ROM, a random access memory RAM, a magnetic disk, a compact disc, or the like.

An embodiment of this application further provides a chip, where the chip includes a processor and a communication interface, the communication interface is coupled to the processor, the processor is configured to run a program or instructions to implement each process of the foregoing method embodiments, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application provides a computer program product, where the program product is stored in a storage medium, and the program product is executed by at least one processor to implement each process of the foregoing method embodiments, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or a compact disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A communication method, comprising:
receiving, by a second device, a first input performed by a user on a communication icon among at least one communication icon displayed in a shooting preview interface, wherein the first input is used to select a communication icon, and the communication icon is used to indicate a communication application;
in response to the first input, displaying, by the second device in the shooting preview interface, at least one contact sign in a communication application indicated by the communication icon selected by the first input, wherein a contact sign is used to indicate a contact or a session group in the communication application;
receiving, by the second device, a second input performed by the user on a first contact sign among the at least one contact sign, wherein the second input is used to select a contact sign, and the first contact sign indicates a first contact; and
in response to the second input, displaying, by the second device, a communication window, wherein the communication window is a communication window between the first contact and a second contact, the first contact is a contact corresponding to a first device, and the second contact is a contact corresponding to the second device.

2. The method according to claim 1, wherein the first input comprises an air gesture input or an input performed by the user on a physical key on the second device;
the second input comprises an air gesture input or an input performed by the user on a physical key on the second device; and
the communication window comprises at least one of the following: a session window, and a video call window.

3. The method according to claim 1, wherein the shooting preview interface comprises: at least one information sign, wherein the information sign is used to indicate one piece of communication information; and
after the displaying a communication window, the method further comprises:
receiving, by the second device, a third input performed by the user on an information sign among the at least one information sign, wherein the third input is used to select an information sign, and the information sign indicates communication information; and
in response to the third input, sending, by the second device, a communication message to the first device through the communication window, wherein the communication message comprises the communication information indicated by the information sign selected by the third input.

4. The method according to claim 3, wherein the communication information comprises at least one of the following: diving control information, and notification information.

5. The method according to claim 4, wherein in a case that the communication information comprises the diving control information, the diving control information comprises control information for controlling adjustment of a diving posture or a diving action, and the diving control information is used to indicate a user of the first device to adjust a diving posture or a diving action.

6. The method according to claim 4, wherein in a case that the communication information comprises the notification information, the notification information comprises at least one of the following: notification information for passing a to-do item to a user of the first device, notification information for passing a user status of a user of the second device to the user of the first device, and notification information for passing inquiry information to the user of the first device.

7. The method according to claim 1, wherein the at least one contact sign comprises at least one of the following: a contact sign of a contact corresponding to a device with a signal strength greater than a strength threshold, and a contact sign of a contact corresponding to a device whose distance from the second device is less than a first distance threshold and that has established a Bluetooth connection to the second device.

8. The method according to claim 7, wherein the at least one contact sign comprises the contact sign of the contact corresponding to the device whose distance from the second device is less than the first distance threshold and that has established a Bluetooth connection to the second device;
the second device and the first device have been paired via Bluetooth and have established a Bluetooth connection, and the method further comprises:
in a case that a distance between the second device and the first device is greater than the first distance threshold, disconnecting the Bluetooth connection between the first device and the second device; and
the method further comprises:
monitoring, by the second device, a change in distance to the first device; and
in a case of detecting that the distance to the first device changes from greater than the first distance threshold to less than the first distance threshold, reestablishing, by the second device, a Bluetooth connection to the first device, and using the contact sign of the contact corresponding to the first device as a contact sign displayable in the shooting preview interface.

9. The method according to claim 1, wherein the method further comprises:
receiving, by the second device, first underwater position information sent by the first device, wherein the first underwater position information comprises: height information of the first device underwater relative to water surface, and latitude and longitude information of a position of the first device;
determining, by the second device, an underwater relative position relationship between the first device and the second device based on the first underwater position information and second underwater position information of the second device, wherein the second underwater position information comprises: height information of the second device underwater relative to the water surface, and latitude and longitude information of a position of the second device;
displaying, by the second device in the shooting preview interface, the first contact sign and a second contact sign of the second contact based on a mapping relationship between the underwater relative position relationship and a display position relationship between two contact signs in the shooting preview interface; and
correspondingly updating, by the second device, display positions of the first contact sign and the second contact sign in the shooting preview interface based on a change in the underwater relative position relationship between the first device and the second device; wherein
the first contact sign comprises at least one of the following: a first contact icon, and an environment image of an actual underwater position of the first device; and the second contact sign comprises at least one of the following: a second contact icon, and an environment image of an actual underwater position of the second device.

10. The method according to claim 9, wherein the method further comprises:
in a case that an actual distance between the first device and the second device is less than a second distance threshold, receiving, by the second device, at least one preview image sent by the first device;
each time the second device receives a preview image sent by the first device, performing, by the second device, image fusion on the preview image sent by the first device and a preview image captured by a camera of the second device at the same time, to obtain a fused preview image; and
sequentially displaying, by the second device in the shooting preview interface, the fused preview images obtained from each fusion.

11. The method according to claim 9, wherein the method further comprises:
displaying, by the second device, navigation prompt information in the shooting preview interface; wherein
the navigation prompt information comprises at least one of the following: navigation direction prompt information, and actual distance information between the first device and the second device; and
the navigation direction prompt information comprises navigation prompt information in a horizontal plane direction and navigation prompt information in a vertical plane direction.

12. The method according to claim 1, wherein before the receiving, by a second device, a first input performed by a user on a communication icon among at least one communication icon displayed in a shooting preview interface, the method further comprises:
in a case of detecting that a shooting environment is an underwater shooting environment, displaying, by the second device, the at least one communication icon in the shooting preview interface.

13. A communication method, comprising:
displaying, by a first device, a communication window, wherein the communication window is a communication window between a first contact and a second contact, the first contact is a contact corresponding to the first device, and the second contact is a contact corresponding to a second device;
receiving, by the first device through the communication window, a communication message sent by the second device, wherein the communication message comprises communication information, and the communication information is information indicated by an information sign selected by a user of the second device from at least one information sign; and
displaying, by the first device, the communication information.

14. The method according to claim 13, wherein the communication window comprises at least one of the following: a session window, and a video call window.

15. The method according to claim 13, wherein the communication information comprises at least one of the following: diving control information, and notification information.

16. The method according to claim 15, wherein in a case that the communication information comprises the diving control information, the diving control information comprises control information for controlling adjustment of a diving posture or a diving action, and the diving control information is used to indicate a user of the first device to adjust a diving posture or a diving action.

17. The method according to claim 15, wherein in a case that the communication information comprises the notification information, the notification information comprises at least one of the following: notification information for passing a to-do item to a user of the first device, notification information for passing a user status of the user of the second device to the user of the first device, and notification information for passing inquiry information to the user of the first device.

18. The method according to claim 13, wherein the displaying, by the first device, the communication information comprises:
in a case that the communication window is displayed in full screen, displaying, by the first device, a message or a bullet comment in the communication window, wherein both the message and the bullet comment comprise the communication information; and
in a case that a shooting preview interface of the first device is displayed in full screen and the communication window is overlaid on the shooting preview interface, displaying, by the first device, a piece of prompt information in the communication window or updating a display mode of the communication window, and displaying a bullet comment in the shooting preview interface, wherein both the prompt information and the bullet comment comprise the communication information; and the display mode comprises at least one of the following: a vibration mode, a highlight display mode, a magnified display mode, and a color change display mode.

19. A communication apparatus, wherein the communication apparatus comprises:
a receiving module configured to receive a first input performed by a user on a communication icon among at least one communication icon displayed in a shooting preview interface, wherein the first input is used to select a communication icon, and the communication icon is used to indicate a communication application; and
a display module configured to, in response to the first input received by the receiving module, display, in the shooting preview interface, at least one contact sign in a communication application indicated by the communication icon selected by the first input, wherein a contact sign is used to indicate a contact or a session group in the communication application; wherein
the receiving module is further configured to receive a second input performed by the user on a first contact sign among the at least one contact sign displayed by the display module, wherein the second input is used to select a contact sign, and the first contact sign indicates a first contact; and
the display module is further configured to, in response to the second input received by the receiving module, display a communication window, wherein the communication window is a communication window between the first contact and a second contact, the first contact is a contact corresponding to a first device, and the second contact is a contact corresponding to a second device.

20. The apparatus according to claim 19, wherein the first input comprises an air gesture input or an input performed by the user on a physical key on the second device;
the second input comprises an air gesture input or an input performed by the user on a physical key on the second device; and the communication window comprises at least one of the following: a session window, and a video call window.

21. The apparatus according to claim 19, wherein the shooting preview interface comprises: at least one information sign, wherein the information sign is used to indicate one piece of communication information;
the receiving module is further configured to, after the display module displays the communication window, receive a third input performed by the user on an information sign among the at least one information sign, wherein the third input is used to select an information sign, and the information sign indicates communication information; and
the apparatus further comprises a sending module configured to, in response to the third input received by the receiving module, send a communication message to the first device through the communication window, wherein the communication message comprises the communication information indicated by the information sign selected by the third input.

22. The apparatus according to claim 21, wherein the communication information comprises at least one of the following: diving control information, and notification information.

23. The apparatus according to claim 22, wherein in a case that the communication information comprises the diving control information, the diving control information comprises control information for controlling adjustment of a diving posture or a diving action, and the diving control information is used to indicate a user of the first device to adjust a diving posture or a diving action.

24. The apparatus according to claim 22, wherein in a case that the communication information comprises the notification information, the notification information comprises at least one of the following: notification information for passing a to-do item to a user of the first device, notification information for passing a user status of a user of the second device to the user of the first device, and notification information for passing inquiry information to the user of the first device.

25. The apparatus according to claim 19, wherein the at least one contact sign comprises at least one of the following: a contact sign of a contact corresponding to a device with a signal strength greater than a strength threshold, and a contact sign of a contact corresponding to a device whose distance from the second device is less than a first distance threshold and that has established a Bluetooth connection to the second device.

26. The apparatus according to claim 25, wherein the at least one contact sign comprises the contact sign of the contact corresponding to the device whose distance from the second device is less than the first distance threshold and that has established a Bluetooth connection to the second device; the second device and the first device have been paired via Bluetooth and have established a Bluetooth connection;
the device further comprises a processing module configured to, in a case that a distance between the second device and the first device is greater than the first distance threshold, disconnect the Bluetooth connection between the first device and the second device; and
the device further comprises a monitoring module configured to monitor a distance change with the first device; wherein
the processing module is further configured to, in a case that the monitoring module detects that the distance with the first device changes from greater than the first distance threshold to less than the first distance threshold, re-establish a Bluetooth connection to the first device; and
the display module is further configured to, in a case that the monitoring module detects that the distance with the first device changes from greater than the first distance threshold to less than the first distance threshold, use the contact sign of the contact corresponding to the first device as a contact sign displayable in the shooting preview interface.

27. The apparatus according to claim 19, wherein the receiving module is further configured to receive first underwater position information sent by the first device, wherein the first underwater position information comprises: height information of the first device underwater relative to water surface, and latitude and longitude information of a position of the first device;
the device further comprises a determining module configured to determine an underwater relative position relationship between the first device and the second device based on the first underwater position information received by the receiving module and second underwater position information of the second device, wherein the second underwater position information comprises: height information of the second device underwater relative to the water surface, and latitude and longitude information of a position of the second device;
the display module is further configured to display, in the shooting preview interface, the first contact sign and a second contact sign of the second contact based on a mapping relationship between the underwater relative position relationship determined by the determining module and a display position relationship between two contact signs in the shooting preview interface; and
the display module is further configured to correspondingly update display positions of the first contact sign and the second contact sign in the shooting preview interface based on a change in the underwater relative position relationship between the first device and the second device; wherein
the first contact sign comprises at least one of the following: a first contact icon, and an environment image of an actual underwater position of the first device; and the second contact sign comprises at least one of the following: a second contact icon, and an environment image of an actual underwater position of the second device.

28. The apparatus according to claim 27, wherein the receiving module is further configured to, in a case that an actual distance between the first device and the second device is less than a second distance threshold, receive at least one preview image sent by the first device;
the apparatus further comprises a fusion module configured to, each time a preview image sent by the first device is received by the receiving module, perform image fusion on the preview image sent by the first device and a preview image captured by a camera of the second device at a same time, to obtain a fused preview image; and
the display module is further configured to sequentially display, in the shooting preview interface, the fused preview images obtained by the fusion module from each fusion.

29. The apparatus according to claim 27, wherein the display module is further configured to display navigation prompt information in the shooting preview interface; wherein
the navigation prompt information comprises at least one of the following: navigation direction prompt information, and actual distance information between the first device and the second device; and
the navigation direction prompt information comprises navigation prompt information in a horizontal plane direction and navigation prompt information in a vertical plane direction.

30. The apparatus according to claim 19, wherein the display module is further configured to, before the receiving module receives the first input performed by the user on the communication icon among the at least one communication icon displayed in the shooting preview interface, in a case that a shooting environment is detected as an underwater shooting environment, display the at least one communication icon in the shooting preview interface.

31. A communication apparatus, wherein the communication apparatus comprises:
a display module configured to display a communication window; wherein the communication window is a communication window between a first contact and a second contact, the first contact is a contact corresponding to a first device, and the second contact is a contact corresponding to a second device; and
a receiving module configured to receive, through the communication window displayed by the display module, a communication message sent by the second device, wherein the communication message comprises communication information, and the communication information is information indicated by an information sign selected by a user of the second device from at least one information sign; wherein
the display module is further configured to display the communication information received by the receiving module.

32. The apparatus according to claim 31, wherein the communication window comprises at least one of the following: a session window, and a video call window.

33. The apparatus according to claim 31, wherein the communication information comprises at least one of the following: diving control information, and notification information.

34. The apparatus according to claim 33, wherein in a case that the communication information comprises the diving control information, the diving control information comprises control information for controlling adjustment of a diving posture or a diving action, and the diving control information is used to indicate a user of the first device to adjust a diving posture or a diving action.

35. The apparatus according to claim 33, wherein in a case that the communication information comprises the notification information, the notification information comprises at least one of the following: notification information for passing a to-do item to a user of the first device, notification information for passing a user status of the user of the second device to the user of the first device, and notification information for passing inquiry information to the user of the first device.

36. The apparatus according to claim 31, wherein the display module is further configured to:
in a case that the communication window is displayed in full screen, display a message or a bullet comment in the communication window, wherein both the message and the bullet comment comprise the communication information; and
in a case that a shooting preview interface of the first device is displayed in full screen and the communication window is overlaid on the shooting preview interface, display a piece of prompt information in the communication window or update a display mode of the communication window, and display a bullet comment in the shooting preview interface, wherein both the prompt information and the bullet comment comprise the communication information; and the display mode comprises at least one of the following: a vibration mode, a highlight display mode, a magnified display mode, and a color change display mode.

37. An electronic device, comprising a processor and a memory, wherein the memory stores a program or an instruction executable on the processor, and when the program or the instruction is executed by the processor, the steps of the communication method according to any one of claims 1 to 12 are implemented.

38. An electronic device, comprising a processor and a memory, wherein the memory stores a program or an instruction executable on the processor, and when the program or the instruction is executed by the processor, the steps of the communication method according to any one of claims 13 to 18 are implemented.
